(19) Europäisches Patentamt
European Patent Office
Office européen des brevets

(11) EP 3 087 440 B1

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **14818941.8**

(22) Anmeldetag: **16.12.2014**

(51) Int Cl.:
***G05B 19/042*** *(2006.01)* ***G06F 11/20*** *(2006.01)*
***G05B 23/02*** *(2006.01)*

(86) Internationale Anmeldenummer:
**PCT/EP2014/078018**

(87) Internationale Veröffentlichungsnummer:
**WO 2015/124234 (27.08.2015 Gazette 2015/34)**

(54) **VERFAHREN ZUM AUSWÄHLEN MEHRERER PROGRAMMFUNKTIONEN, VERFAHREN ZUM AUSWÄHLEN EINER PROGRAMMFUNKTION, ZUGEHÖRIGE VORRICHTUNGEN UND ZUGEHÖRIGES FAHRZEUG, SCHIFF ODER FLUGZEUG**

METHOD FOR SELECTING A PLURALITY OF PROGRAM FUNCTIONS, METHOD FOR SELECTING A PROGRAM FUNCTION, ASSOCIATED APPARATUSES AND ASSOCIATED VEHICLE, SHIP OR AIRCRAFT

PROCÉDÉ DE SÉLECTION DE PLUSIEURS FONCTIONS DE PROGRAMME, PROCÉDÉ DE SÉLECTION D'UNE FONCTION DE PROGRAMME, DISPOSITIFS ASSOCIÉS ET VÉHICULE, BATEAU OU AÉRONEF ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2014 DE 102014203162**

(43) Veröffentlichungstag der Anmeldung:
**02.11.2016 Patentblatt 2016/44**

(73) Patentinhaber: **Siemens Aktiengesellschaft**
**80333 München (DE)**

(72) Erfinder:
- **ARMBRUSTER, Michael**
**80339 München (DE)**
- **ZIRKLER, Andreas**
**81735 München (DE)**

(56) Entgegenhaltungen:

- **REICHEL, R., ARMBRUSTER, M.: "X-by-Wire Plattform - Konzept und Auslegung", AT - AUTOMATISIERUNGSTECHNIK, Bd. 59, Nr. 9, 2. September 2011 (2011-09-02), Seiten 583-596, XP002737492,**
- **LI, X.J., BIN, G.F., DHILLON, B.S.: "Model to evaluate the state of mechanical equipment based on health value", MECHANISM AND MACHINE THEORY, Bd. 46, Nr. 3, 14. Dezember 2010 (2010-12-14), Seite 305-311, XP002737493,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 087 440 B1

**Beschreibung**

Die Erfindung bezieht sich u.a. auf ein Verfahren bzw. eine Vorrichtung zum Auswählen einer Programmfunktion für das Erbringen einer mehrfach realisierten Funktion, d.h. einer redundant erbrachten Funktion. Es kann eine einfache Redundanz, d.h. zwei Funktionen, oder eine mehrfache Redundanz größer als Eins vorliegen. Die zueinander redundanten Funktionen können auf identische Art und Weise erbracht werden oder auf voneinander verschiedene Art und Weise, bspw. wenn eine redundante Funktion nur eine Notfunktion gewährleisten soll.

Insbesondere im Zusammenhang mit autonomen Fahren haben redundante Systeme eine große Bedeutung. Autonomes Fahren kommt sowohl für Elektrofahrzeuge, für Verbrennungsfahrzeuge als auch für Hybridfahrzeuge in Betracht. In der Luftfahrt gibt es das autonome Fliegen schon längere Zeit. Jedoch sind auch in der Luftfahrt noch Verbesserungen von redundanten Systemen möglich.

"Reichel, R., Armbruster, M.: "X-by-Wire Plattform - Konzept und Auslegung"; AT - Automatisierungstechnik, Bd. 59, Nr. 9. 2. September 2011, Seiten 583-596" beschreibt eine X-by-Wire Plattform zur gesamtheitlichen Umsetzung des Global Chassis-Control.

"Li, X.J., BIN, G.F., Dhillon, B.S.: "Model to evaluate the state of mechanical equipment based on health value", Mechanism and machine theory, Bd. 46, Nr. 3, 14. Dezember 2010 Seite 305-311" beschreibt die Probleme der Systemauswertung einer mechanischen Ausrüstung, die durch verschiedene Faktoren einschließlich der Vielfältigkeit der Struktur, der nahen Bedeutung und der komplexen Betriebsumgebung verursacht werden.

Die Erfindung betrifft ein Verfahren zum Auswählen einer Programmfunktion für das Erbringen einer mehrfach realisierten Funktion, insbesondere in einem Fahrzeug, Schiff oder in einem Flugzeug,

- wobei Abhängigkeiten vermerkt werden oder worden sind zwischen Einzelleistungswerten für Funktionseinheiten (Aggregat/Netzknoten), die beim Ausführen der Programmfunktion verwendet werden, und Gesamtleistungswerten, die für eine mehrfach realisierte Funktion festgelegt worden sind,
- wobei aktuelle Einzelleistungswerte der Funktionseinheiten ermittelt werden,
- wobei die ermittelten Einzelleistungswerte und die vermerkten Abhängigkeiten zur Ermittlung oder zur Berechnung eines Gesamtleistungswertes verwendet werden,
- und wobei der Gesamtleistungswert oder mindestens ein daraus ermittelter oder berechneter Wert für die Auswahl der Programmfunktion oder einer anderen Programmfunktion für das Erbringen der mehrfach realisierten Funktion verwendet wird, und wobei die Einzelleistungswerte und die aktuellen Einzelleistungswerte generische, funktionsunspezifische Degradationslevel sind.

Außerdem betrifft die Erfindung eine Vorrichtung, insbesondere zum Ausführen des oben genannten Verfahrens,

- mit einer Speichereinheit, in der Abhängigkeiten vermerkt werden oder worden sind zwischen Einzelleistungswerten für Funktionseinheiten (Aggregat/Netzknoten), die beim Ausführen einer Programmfunktion verwendet werden, und Gesamtleistungswerten, die für eine mehrfach realisierte Funktion festgelegt worden sind,
- mit einer Ermittlungseinheit, die aktuelle Einzelleistungswerte ermittelt,
- mit einer weiteren Ermittlungseinheit oder Berechnungseinheit, die die ermittelten Einzelleistungswerte und die vermerkten Abhängigkeiten zur Ermittlung oder zur Berechnung eines Gesamtleistungswertes verwendet,
- und mit einer Auswahleinheit, die den aktuellen Gesamtleistungswert oder mindestens einen daraus ermittelten oder berechneten Wert für die Auswahl der Programmfunktion oder einer anderen Programmfunktion für das Erbringen der mehrfach realisierten Funktion verwendet, wobei die Einzelleistungswerte und die aktuellen Einzelleistungswerte generische, funktionsunspezifische Degradationslevel sind.

Die Erfindung betrifft weiterhin ein Fahrzeug, ein Schiff oder ein Flugzeug mit einer der oben erwähnten Vorrichtungen.

Es ist eine Aufgabe von Ausgestaltungen der Erfindung einfache Verfahren zum Auswählen mehrerer Programmfunktionen für das Erbringen von mehrfach realisierten Funktionen bzw. ein Verfahren zum Auswählen einer Programmfunktion für das Erbringen einer mehrfach realisierten Funktion anzugeben, die insbesondere auf einfache Art erweitert werden können. Außerdem sollen zugehörige Vorrichtungen und zugehörige Fahrzeuge, Schiffe bzw. Flugzeuge angegeben werden.

Die auf das Verfahren bezogene Aufgabe wird durch das Verfahren nach Anspruch 1 gelöst. Weiterbildungen sind in den Unteransprüchen angegeben. Die auf die zugehörige Vorrichtung bzw. die zugehörigen Transportmittel bezogenen Aufgaben werden durch die Gegenstände der nebengeordneten Ansprüche gelöst.

Für ein Verfahren zum Auswählen mehrerer Programmfunktionen für das Erbringen von mehrfach realisierten Funktionen, insbesondere in einem Fahrzeug, Schiff oder in einem Flugzeug, kann gelten:

- wobei erste Abhängigkeiten vermerkt werden oder worden sind zwischen Einzelleistungswerten für Funktionseinheiten, die beim Ausführen einer ersten Programmfunktion verwendet werden, was im Folgenden auch als Funktionseinheiten der Programmfunktion bzw. der Funktion bezeichnet wird, und Gesamtleistungswerten, die für die mehrfach realisierten Funktionen festgelegt worden sind,
- wobei zweite Abhängigkeiten vermerkt werden oder worden sind zwischen Einzelleistungswerten für Funktionseinheiten, die beim Ausführen einer zweiten Programmfunktion verwendet werden, und den festgelegten Gesamtleistungswerten,
- wobei aktuelle erste Einzelleistungswerte der Funktionseinheiten der ersten Programmfunktion ermittelt werden,
- wobei aktuelle zweite Einzelleistungswerte der Funktionseinheiten der zweiten Programmfunktion ermittelt werden,
- wobei die ermittelten ersten Einzelleistungswerte und die vermerkten ersten Abhängigkeiten zur Ermittlung oder zur Berechnung eines ersten Gesamtleistungswertes verwendet werden,
- wobei die ermittelten zweiten Einzelleistungswerte und die vermerkten zweiten Abhängigkeiten zur Ermittlung oder zur Berechnung eines zweiten Gesamtleistungswertes verwendet werden,
- wobei aus dem ersten Gesamtleistungswert und aus dem zweiten Gesamtleistungswert ein Clusterleistungswert ermittelt wird, und
- wobei der Clusterleistungswert oder mindestens ein daraus ermittelter oder berechneter Wert für die Auswahl der Programmfunktionen oder anderer Programmfunktionen für das Erbringen der mehrfach realisierten Funktionen verwendet wird.

Der Cluster enthält somit mehrere Funktionen. Im Gegensatz zu der Durchführung des Verfahrens ohne Clusterung führt die Clusterung dazu, das der Berechnungsaufwand erheblich sinkt und somit Rechenzeit eingespart wird. Damit kann das Verfahren zyklisch innerhalb einer Zeit kleiner als 50 ms durchgeführt werden, auch wenn es mehrere Funktionen betrifft.

Bei dem Verfahren zum Auswählen einer Programmfunktion für das Erbringen einer mehrfach realisierten Funktion, insbesondere in einem Fahrzeug, Schiff oder in einem Flugzeug, können:

- Abhängigkeiten vermerkt werden oder vermerkt worden zwischen Einzelleistungswerten für Funktionseinheiten (Aggregat/Netzknoten), die beim Ausführen der Programmfunktion verwendet werden, und Gesamtleistungswerten, die für die mehrfache realisierte Funktion festgelegt worden sind,
- aktuelle Einzelleistungswerte der Funktionseinheiten (der Funktion bzw. der Programmfunktion) ermittelt werden,
- die ermittelten Einzelleistungswerte und die vermerkten Abhängigkeiten zur Ermittlung oder zur Berechnung eines Gesamtleistungswertes für die Funktionseinheiten (der Funktion bzw. der Programmfunktion) verwendet werden, und
- der Gesamtleistungswert oder mindestens ein daraus ermittelter oder berechneter Wert kann für die Auswahl der Programmfunktion bzw. der Funktion oder für die Auswahl einer anderen Programmfunktion bzw. einer anderen Funktion für das Erbringen der mehrfach realisierten Funktion verwendet werden.

Damit kann das Verfahren bspw. auch ohne Clusterung durchgeführt werden.

Die mehrfach realisierte Funktion wird bei beiden Alternativen demnach redundant erbracht. Die Abhängigkeiten können in einer Matrix oder auf andere Art und Weise vermerkt werden.

Der Gesamtleistungswert kann als y bezeichnet werden und ist vorzugsweise eine skalare Größe, die für einen einfachen Vergleich mit anderen skalaren Größen besonders geeignet ist. Durch die genannten Schritte kann also auf besonders einfache Art und Weise ein Gesamtleistungswert ermittelt werden, der die Auswahl von im Moment bevorzugt zu benutzenden Funktionseinheiten in einer Master-Servant (Meister, Diener) bzw. Master-Slave (Meister, Sklave) Steuerung oder Regelung ermöglicht, insbesondere an Hand von objektiven Kriterien. Insbesondere können eine Vielzahl von verschiedenen Kriterien bei der Auswahl berücksichtigt werden. Indirekt können damit solche Einheiten zurückgestellt werden, die stärker als andere Einheiten beeinträchtigt bzw. degradiert sind, bspw. auf Grund von kurzfristigen oder dauerhaften Störungen.

Die Programmfunktion kann Befehle enthalten, die durch einen Prozessor einer ersten DVA ausgeführt werden. Die Programmfunktion definiert sich auch dadurch, dass sie eine Einheit ist, auf die eine Master-Slave-Funktion angewandt werden kann, bspw. entweder alleinig oder gemeinsam mit anderen Programmfunktionen.

Die Abhängigkeiten können in einer Matrix vermerkt werden. So können die Zeilen der Matrix den Gesamtleistungswerten und die Spalten der Matrix den Einzelleistungswerten zugeordnet werden. Alternativ können die Spalten der Matrix den Gesamtleistungswerten und die Zeilen der Matrix den Einzelleistungswerten zugeordnet werden oder worden sein. Eine Matrixanordnung ist eine sehr übersichtliche Form der Darstellung. Außerdem kann eine Berechnung mit Matrizen auf einfache Art und Weise implementiert werden, z.B. in einem Mikroprozessor, einem Mikrocontroller oder einer Recheneinheit, die keinen Prozessor bzw. Controller enthält, der Programmbefehle eines Programms abarbeitet.

Die Matrix kann bspw. nur zwei voneinander verschiedene Werte enthalten, insbesondere die Werte 0 und 1, was die Berechnung weiter vereinfacht und beschleunigt.

Für mindestens einen Gesamtleistungswert können mindestens zwei Zeilen der Matrix oder mindestens zwei Spalten der Matrix vorgesehen sein. So lassen sich ODER-Verknüpfungen auf einfache Weise in mehreren Zeilen darstellen. Alternativ oder zusätzlich können auch Zustände von Funktionseinheiten berücksichtigt werden, auf die es für den betreffenden Gesamtleistungswert ankommt, d.h. insbesondere Permutationen von Zustandswerten für solche Funktionseinheiten.

Es können mehrere Klassen von Funktionseinheiten festgelegt werden, deren Einzelleistungswerte eine klassenspezifische Bedeutung haben. Mindestens zwei Funktionseinheiten der Funktion können zu derselben Klasse gehören. Alternativ oder zusätzlich können mindestens zwei Funktionseinheiten der Funktion zu voneinander verschiedenen Klassen gehören.

Die Klassen können auf mindestens einem, mindestens zwei oder auf allen der folgenden Redundanzmerkmale beruhend festgelegt werden oder festgelegt worden sein:

- keine Redundanz einer Funktionseinheit oder Redundanz durch mehrfach vorgesehenen Funktionseinheiten, d.h. für diese Funktion gibt es nur die eine Funktionseinheit,
- keine Werteredundanz oder Werteredundanz bezogen auf eine Funktionseinheit, bspw. werden die Werte mehrmals ermittelt und auch mehrmals übertragen und/oder es werden mehrere zueinander redundante Sensoren verwendet,
- keine Kommunikationsredundanz, insbesondere Kommunikationsstreckenredundanz, oder mehrfache Kommunikationsredundanz, insbesondere Kommunikationsstreckenredundanz.

Kommunikationsredundanz kann vorliegen, wenn es mehrere Übertragungsstrecken, gedoppelte Übertragungspakete oder Nachrichten gibt.

Durch diese Art des Festlegens der Klassen ist insbesondere eine einfache Erweiterbarkeit des Systems gegeben. Neue Funktionseinheiten können in bereits festgelegte Klassen eingeordnet werden. Damit kann die Funktion/Applikation durch Funktionseinheiten (Aggregat/Netzknoten) nachträglich erweitert werden, bspw. über Plug und Play Konzepte, das heißt durch einfaches Anstecken. Auch kann eine Klasse bereits auf Grund einer vorhandenen Systematik bereits festgelegt werden, bevor Funktionseinheiten, die in diese Klasse gehören, in die Funktion eingefügt werden.

Die Gesamtleistungswerte für die Funktion können für mehrere oder für alle Funktionseinheiten gleichermaßen festgelegt werden oder festgelegt worden sein. Es kann mindestens eines der folgenden Kriterien berücksichtigt werden:

- die Auswirkung eines Fehlers hinsichtlich der Beeinträchtigung von Passagieren und/oder Fracht,
- das Unterschreiten einer Wartungsmission oder eines Wartungsintervalls, sowie
- der Abbruch einer Fahrt oder Fahrmission oder eines Fluges.

Somit werden Kriterien berücksichtigt, die für den Gebrauch des Transportmittels von großer Bedeutung sind und damit auch die Funktionsfähigkeit der Funktionseinheiten gut wiedergeben. Eine Wartungsmission kann bei einem Fahrzeug bspw. mehr als 50000 Kilometer betragen.
Eine Fahrmission kann bei einem Fahrzeug bspw. mehr als 4 h betragen.

Durch diese Art der Festlegung der Gesamtleistungswerte ist wiederum insbesondere eine einfache Erweiterbarkeit des Systems gegeben. Neu entwickelte Funktionseinheiten können in die Funktion nachträglich eingefügt werden bzw. durch die Programmfunktion nachträglich genutzt werden, bspw. über Plug und Play Konzepte, das heißt durch einfaches Anstecken, wobei auch für diese Funktionseinheiten, die früher festgelegten Gesamtleistungswerte gelten. Dies gilt auch für das Nachrüsten von Funktionseinheiten in Transportmitteln.

Die aktuellen Einzelleistungswerte können in einer Matrix oder in einem Vektor vermerkt werden. Somit liegt wieder eine übersichtliche Form des Vermerken einer Vielzahl von Werten vor. Auch ist die Matrix bzw. der Vektor für eine schnelle Berechnung eines aktuellen Gesamtleistungswertes besonderes geeignet. Die Matrix oder der Vektor können nur zwei voneinander verschiedene Werte enthalten, insbesondere die Werte 0 und 1. Dadurch lassen sich Rechenoperationen mit der Matrix oder mit dem Vektor weiter beschleunigen.

Die Ermittlung des Gesamtleistungswertes kann durch Multiplikation der beiden Matrizen, d.h. Abhängigkeitsmatrix und Einzelleistungswertmatrix, oder durch Multiplikation der Matrix, d.h. der Abhängigkeitsmatrix, und des Vektors mit den Einzelleistungswerten erfolgen. Abhängig von der Reihenfolge der Multiplikation kann bei der Multiplikation bspw. die transponierte der Abhängigkeitsmatrix oder die transponierte der Einzelleistungswertmatrix bzw. der transponierte Vektor verwendet werden. Transponieren bedeutet, dass in einer Matrix die Elemente bezüglich ihrer aktuellen Zeile und Spalte vertauscht werden. Die Matrixmultiplikation (inklusive Vektormultiplikation) kann für größere Matrizen implementiert werden als Funktionseinheiten vorhanden sind, um eine einfache Erweiterbarkeit des Systems zu gewährleisten.

Die Ermittlung des aktuellen Gesamtleistungswertes kann unter Verwendung einer Berechnungsfunktion erfolgen, die für Werte kleiner oder ungleich der Anzahl der Funktionseinheiten der Funktion bzw. der Programmfunktion zu einem ersten Wert definiert ist, insbesondere zu 0, und die für einen Wert gleich dieser Anzahl zu einem zweiten Wert definiert ist, der sich von dem ersten Wert unterscheidet, insbesondere den Wert 1. Die Funktion kann z.B. auf der x-Achse verschobene Sprungfunktion sein, die ggf. auch als verschobene Sigmafunktion bezeichnet werden kann. Werte größer als die Anzahl der Funktionseinheiten in der Funktion können bspw. nicht auftreten, so dass diese Werte auch nicht definiert werden müssen. Durch das Verwenden einer solchen Berechnungsfunktion lassen sich Werte, die bei der Matrizenmultiplikation entstanden sind und die kleiner als die Anzahl der Funktionseinheiten in der Funktion sind, wieder auf den Wert 1 bzw. 0 zurückführen. Werte, die der Anzahl der Funktionseinheiten in der Funktion entsprechen, werden bspw. auf den Wert 1 gesetzt. Dies ermöglicht eine einfache Ermittlung eines skalaren Gesamtleistungswertes, wenn bspw. die Werteskala mit einem Vektor multipliziert wird, der nur in einem Element den Wert 1 enthält.

Somit kann für die Ermittlung des Gesamtleistungswertes ein Vektor verwendet werden, in dem die Gesamtleistungswerte in Übereinstimmung mit den vermerkten Abhängigkeiten vermerkt sind. Vorzugsweise wird dieser Vektor und ein Vektor oder eine Matrix multipliziert, der oder die unter Anwenden der oben angegebenen Berechnungsfunktion ermittelt worden ist. Es entsteht eine mathematisch geschlossene Darstellung, die insbesondere die technische Zertifizierung erleichtert.

Das Verfahren kann gemäß beider Alternativen zyklisch ausgeführt werden, vorzugsweise mit einer Zykluszeit kleiner als 50 Millisekunden.

Mindestens eine Funktionseinheit kann ein Netzknoten sein, insbesondere:

- eine Lenkstellaggregat mit Steuerelektronik, oder
- ein Radnabenmotor, ggf. mit Inverter und/oder Steuerelektronik, oder
- ein Netzknoten mit der Aufgabe, den Fahrpedalwert auszulesen und zu übertragen,
- ein Netzknoten mit Antriebsmotor am Rad hinten rechts, analog hinten links oder an einer anderen Stelle, oder
- eine Programmfunktion mit der Aufgabe aus dem Fahrpedal-Sensorwert eine Sollvorgabe zur Ansteuerung der angetriebenen Räder hinten rechts und links oder an anderer Stelle zu ermitteln.

Der Netzknoten kann Bestandteil eines Datenübertragungsnetzes sein, insbesondere eines Datenübertragungsnetzes, das Datenpakete überträgt, z.B. LAN (Local Area Network)/Ethernet oder WLAN (Wireless LAN).

Mindestens eine Funktionseinheit kann durch die Programmfunktion selbst realisiert sein, bspw. ein Programm für die Funktion "Fahren". Auf der Ebene der Funktionseinheiten wird die Programmfunktion bspw. nur darauf hin betrachtet, ob sie Daten liefern kann (Running) oder nicht ausführbar ist (Isolated), wobei insbesondere nicht berücksichtigt wird, ob die Daten richtig sind oder nicht.

Es kann eine Funktion für das "Fahren" eines Fahrzeugs vorgesehen sein. Die Funktion für das Fahren kann mindestens eine der folgenden Funktionseinheiten enthalten:

- eine ein Fahrpedal betreffende Funktion,
- mindestens eine, mindestens zwei oder mindestens vier ein Rad betreffende Funktion(en), die insbesondere jeweils eine einen Antriebsmotor betreffende Funktion enthalten,
- ein das Fahren betreffendes Programm.

Es kann alternativ oder zusätzlich eine Funktion für das Bremsen vorgesehen sein. Die Funktion für das Bremsen kann mindestens eine der folgenden Funktionseinheiten enthalten:

- ein Aggregat zum Auslesen des Fahrerbremswunsches am Bremspedal,
- ein Aggregat zur Ansteuerung der Bremshydraulik,
- vorzugsweise mindestens zwei Aggregate, elektrisch angetriebenes Rad z.B. hinten rechts und links, welche auch zum Bremsen verwendet werden können,
- eine Programmfunktion mit der Aufgabe, den vom Fahrer gewünschten Bremsbefehl in eine Soll-Bremsvorgabe für das Rad z.B. hinten rechts, hinten links sowie den Netzknoten zur Ansteuerung der Hydraulikbremse umzurechnen.

Alternativ oder zusätzlich kann eine Funktion für das Lenken vorgesehen sein. Die Funktion für das Lenken kann mindestens eine der folgenden Funktionseinheiten enthalten:

- Ansteuerung eines Lenkstellers und Ausgabe der Ist-Lenkposition,
- Auswertung des Soll-Lenkwinkels am Lenkrad,
- Programmfunktion Stellervorgabe = f(Ist-Lenkwinkel, Soll-Lenkwinkel) .

Eine Funktion für eine Assistenzfunktion kann ein ABS (Antiblockiersystem), ein ESP (Elektronisches Stabilitätssystem) oder das vollautomatische Fahren betreffen. Es kann eine, es können zwei oder es können alle genannten Assistenzfunktionen vorhanden sein.

Ähnlich kann es bei einem Flugzeug Funktionen für die folgenden Abläufe geben: Bewegen auf dem Rollfeld (Taxing), Start, Abheben, Steigflug, Flug bei konstanter Flughöhe, Sinkflug, Landeanflug, Landung, Ausrollen.

Clusterleistungswerte können für mehrere oder für alle Funktionen gleichermaßen festgelegt werden oder festgelegt worden sein. Eine solche Maßnahme ermöglicht auch auf der Ebene der Funktionen eine einfache Erweiterbarkeit und/oder eine hohe Flexibilität beim Systementwurf.

Vorzugsweise kann mindestens eine, können mindestens zwei oder können alle der folgenden Klassen berücksichtigt werden:

- wichtigste Funktion oder wichtigste Funktionen,
- zweitwichtigste Funktion oder zweitwichtigste Funktionen,
- weniger wichtige Funktion oder weniger wichtige Funktionen.

Diese einfache Kategorisierung ermöglicht eine Gewichtung der Funktionen nach ihrer Bedeutung für das Gesamtsystem und/oder bspw. nach der Bedeutung für die Gesundheit von Personen bzw. die Gefährdung von zu transportierenden Sachwerten.

Es kann wie bspw. auch bezüglich der Gesamtleistungswerte für mehrere Funktionseinheiten bzw. für eine Anwendung/Applikation/Funktion/Programmfunktion bei den Clusterleistungswerten auf mindestens eines, mindestens zwei oder auf alle der folgenden Kriterien Bezug genommen werden:

- die Auswirkung eines Fehlers hinsichtlich der Beeinträchtigung von Passagieren und/oder Fracht,
- das Unterschreitens einer Wartungsmission oder eines Wartungsintervalls,
- den Abbruch einer Fahrt oder Fahrmission oder eines Fluges.

Das Festlegen auf gleiche Art und Weise (generisch), d.h. für mehrere Funktionen, sichert auch hier das einfache Einfügen von weiteren Funktionen in das System.

Der Clusterleistungswert für mehrere Funktionen bzw. Programmfunktionen eines Clusters, kann bspw. über Abfragen ermittelt werden, insbesondere über WENN DANN Abfragen oder über CASE Abfragen (Fallabhängigkeit). Solche Abfragen sind in vielen verbreiteten Programmiersprachen vorhanden. Das Verwenden von Clustern kann in Echtzeitanwendungen wertvolle Rechenzeit sparen. Auch eine so genannte WORST() Funktion kann verwendet werden, bei der der momentan schlechteste Performancewert ermittelt wird.

Eine Vorrichtung, die insbesondere zum Ausführen eines oben genannten Verfahrens geeignet ist, kann enthalten:

- eine Speichereinheit, in der erste Abhängigkeiten vermerkt werden oder worden sind zwischen Einzelleistungswerten für Funktionseinheiten, die beim Ausführen einer ersten Programmfunktion verwendet werden, und Gesamtleistungswerten, die für mehrfach realisierte Funktionen festgelegt worden sind,
  und in der zweite Abhängigkeiten vermerkt werden oder worden sind zwischen Einzelleistungswerten für Funktionseinheiten, die beim Ausführen einer zweiten Programmfunktion verwendet werden, und den festgelegten Gesamtleistungswerten,
- eine Ermittlungseinheit, die aktuelle erste Einzelleistungswerte der Funktionseinheiten der ersten Programmfunktion ermittelt und die aktuelle zweite Einzelleistungswerte der Funktionseinheiten der zweiten Programmfunktion ermittelt,
- eine zweite Ermittlungseinheit, die die ermittelten ersten Einzelleistungswerte und die vermerkten ersten Abhängigkeiten zur Ermittlung oder zur Berechnung eines ersten Gesamtleistungswertes verwendet und die die ermittelten zweiten Einzelleistungswerte und die vermerkten zweiten Abhängigkeiten zur Ermittlung oder zur Berechnung eines zweiten Gesamtleistungswertes verwendet,
- eine dritte Ermittlungseinheit, die aus dem ersten Gesamtleistungswert und aus dem zweiten Gesamtleistungswert einen Clusterleistungswert ermittelt, und
- eine Auswahleinheit, die den Clusterleistungswert oder mindestens einen daraus ermittelten oder berechneten Wert für die Auswahl der ersten Programmfunktion und der zweiten Programmfunktion oder anderer Programmfunktionen für das Erbringen der mehrfach realisierten Funktionen verwendet.

Der Clusterleistungswert für mehrere oder für alle Funktionen oder mindestens ein daraus berechneter Wert kann für die Auswahl der Programmfunktionen des Clusters oder anderer Programmfunktionen eines anderen Clusters für das Erbringen der mehrfach realisierten Funktionen verwendet werden, d.h. für die Master-Slave Umschaltung bzw.

das Aktivieren eines redundant ausgeführten Clusters aufgrund einer besseren Performance.

Somit gelten die oben für die Verfahren angegebenen technischen Wirkungen auch für die Vorrichtung und ihre entsprechenden Weiterbildungen. Insbesondere wird durch die Clusterung eine Einsparung von Rechenzeit erreicht.

Eine Vorrichtung, die insbesondere zum Ausführen eines oben erläuterten Verfahrens geeignet ist, kann folgendes enthalten:

- eine Speichereinheit, in der Abhängigkeiten vermerkt werden oder worden sind zwischen Einzelleistungswerten für Funktionseinheiten, die beim Ausführen einer Programmfunktion verwendet werden, und Gesamtleistungswerten, die für eine mehrfach realisierte Funktion festgelegt worden sind,
- eine Ermittlungseinheit, die aktuelle Einzelleistungswerte der Funktionseinheiten (der Funktion bzw. der Programmfunktion) ermittelt,
- eine weitere Ermittlungseinheit oder Berechnungseinheit, die die ermittelten Einzelleistungswerte und die vermerkten Abhängigkeiten zur Ermittlung oder zur Berechnung eines, insbesondere aktuellen, Gesamtleistungswertes (für die Funktion bzw. für die Programmfunktion) verwendet,
- und eine Auswahleinheit, die den aktuellen Gesamtleistungswert oder mindestens einen daraus ermittelten oder berechneten Wert für die Auswahl der Programmfunktion oder für die Auswahl einer anderen Programmfunktion für das Erbringen der mehrfach realisierten Funktion verwendet.

Somit gelten die oben für die Verfahren angegebenen technischen Wirkungen auch für die Vorrichtung und ihre entsprechenden Weiterbildungen.

Weiterhin kann ein Fahrzeug, ein Schiff oder ein Flugzeug mit einer solchen Vorrichtung ausgestattet werden. Die oben angegebenen technischen Wirkungen gelten analog. Redundanzen und damit verbundene Verfahren zum Ermitteln der Leistungsfähigkeit bzw. der Beeinträchtigung von Funktionseinheiten kommen insbesondere bei der autonomen Steuerung dieser Transportmittel zum Tragen, weil dann der technische Aufwand gerechtfertigt ist, um Gefahren für Personen und für Fracht zu minimieren.

Das Fahrzeug kann ein Elektrofahrzeug, ein Verbrennungsfahrzeug oder ein Hybridfahrzeug dieser beiden Antriebsformen sein. Es kann sich um eine Auto zur Personenbeförderung, um einen Bus, um einen Laster oder um ein anderes Nutzfahrzeug handeln. Neben Fahrzeug und Flugzeug kann die Vorrichtung aber auch in einem Boot oder Schiff enthalten sein.

Mit anderen Worten ausgedrückt, wird ein Verfahren zur Bewertung von Funktionsqualitäten angegeben. Ein Grundproblem fehlertoleranter Systeme liegt darin, die Eindeutigkeit in der Ansteuerung der Aktoren bzw. der Aktorik trotz vorhandener Redundanzen in einem verteilten Netzwerk sicherzustellen.

Grundlage kann ein zweikanaliges oder mehr als zweikanaliges fehlertolerantes Steuersystem sein. Über eine Master-Slave (Servant)-Attributierung eines Kanals wird die oben angesprochene Eindeutigkeit hergestellt.

Das Master-Slave Verfahren wählt von beiden vorhandenen Kanälen einen eindeutig als Master aus. Nur der Master-Kanal steuert die Aktorik, woraufhin für diese deren eindeutige Ansteuerung gewährleistet ist.

Grundlage des Master-Slave Verfahrens kann eine Metrik zur Bewertung und zum Vergleich der Performance eines jeden Kanals untereinander sein. Beschrieben werden u.a. eine Metrik und ein Verfahren zur Bestimmung einer eben solchen Funktionsperformance. Als Metrik kann eine funktionsunabhängige Bewertungsskala von bspw. 0 bis 9 bzw. 0 bis 10 vorgeschlagen werden. Diese lässt sich beliebig erweitern bzw. einschränken, was an der Methodik zur Berechnung der Funktionsperformance eines Kanals allerdings nichts ändert.

Das Verfahren kann aus einer Menge an Transferfunktionen mit den folgenden Aufgaben bestehen:

- 1) Transfer von Fehlerindikationen bzgl. Sensorik/ Aktorik in einen generischen, funktionsunspezifischen Degradationslevel, d.h. Einzelleistungswerte.
- 2) Transfer der funktionsunspezifischen Degradationslevel der Sensorik/ Aktorik in ein Performancelevel aller Einzelfunktionen eines Kanals in je einen Performance-Level auf Basis einer Abhängigkeitsmatrix, d.h. Gesamtleistungswert(e) bzw. Gesamtperformancewert(e).
- 3) Optional beim Verwenden von Clustern: Transfer der Performance-Level der Einzelfunktionen eines Kanals in einen Clusterperformance-Level des Kanals.

Ziel des Verfahrens kann es letztlich sein, den Clusterperformancelevel oder den Gesamtperformancelevel eines Kanals zu bestimmen und an den Master-/Slave Mechanismus zu übergeben.

Master-Slave Verfahren sind seit langem bekannt. Insbesondere Primär- und Sekundärflugsteuersysteme von Flugzeugen stellen ein intensives Anwendungsgebiet dar.

Beispiele für die Anwendung eines Master-Slave Verfahrens in der Automobildomäne gibt es ebenfalls:

- [1] Armbruster, Lehmann, Reichel, Zimmer, Tjaden, Ostertag, Werner: X-by-Wire platform design-approach: Functionality, Safety and Design. In: European Automotive Safety, Frankfurt, 2007.

- [2] Michael Armbruster: Eine fahrzeugübergreifende X-by-Wire Plattform zur Ausführung umfassender Fahr- und Assistenzfunktionen, Institut für Luftfahrtsysteme der Universität Stuttgart 2009, Dissertation.

In [1] wird das Prinzip des prioritätsbasierten Master-Slave Mechanismus aufgezeigt, jedoch keine funktionsunspezifische bzw. keine generische Methodik zur Bestimmung eben dieser Prioritäten.

Da das Master-Slave Verfahren selbst nicht hochgradig komplex ist, wird davon ausgegangen, dass die Verfahren zur Bestimmung der Performance eines Kanals prinzipiell bei den entsprechenden Systemlieferanten bekannt sind, aber darin der Kniff des Mechanismus liegt und daher diese Verfahren nicht veröffentlicht werden. Das hier dargestellte Verfahren grenzt sich bspw. durch eine Abstraktion der Bewertung einer Funktionsperformance von der eigentlichen Funktion ab, egal ob auf der Ebene:

- der Netzknoten, z.B. Lenkungselektronik, Bremsenelektronik, Videosteuergerät,
- der Einzelfunktionen, z.B. Lenken, Fahren, Bremsen, etc., oder
- oder der Funktionscluster, wobei ein Funktionscluster mehrere Einzelfunktionen zusammenfassen kann. Dies ermöglicht die Anwendung des Master-Slave-Verfahrens auf ein Cluster aus Funktionen anstatt auf eine Einzelfunktion. Dies reduziert letztlich den Rechenaufwand. Das Verfahren ist aber auch auf eine Einzelfunktion anwendbar.

Ein derartiges Vorgehen kann bspw. notwendig sein, um die Berechnung der entsprechenden Performancelevel im Rahmen von erweiterbaren Systemen, z.B. Stichwort: safe Plug’n’Play, zum Einsatz zu bringen.

Wie oben dargestellt, kann das Verfahren aus einer Menge an Transferfunktionen mit folgenden Aufgaben bestehen:

- Schritt 1: Transfer von Fehlerindikationen bzgl. Sensorik/ Aktorik in einen generischen, funktionsunspezifischen Degradationslevel.
- Schritt 2: Transfer der funktionsunspezifischen Degradationslevel der Sensorik/ Aktorik in ein Performancelevel aller Einzelfunktionen eines Kanals in je einen Performance-Level auf Basis einer Abhängigkeitsmatrix.
- Schritt 3 (optional): Transfer der Performance-Level der Einzelfunktionen eines Kanals in einen GesamtperformanceLevel des Kanals.

Nachfolgend werden die Schritte im einzelnen präzisiert.

Schritt 1: generische, funktionsunspezifische Degradationslevel von Aggregaten/Netzknoten.

Die Fehlererkennung basiert bspw. auf bekannten Standardfehlererkennungsmechanismen welche auf den Eingangsdatenstrom angewandt werden. Zentrale mögliche Fehlerindikatoren sind bspw.:

- keine Daten empfangen,
- falsche CRC (Cyclic Redundancy Code),
- Werte nicht im Wertebereich,
- Nicht-Übereinstimung redundanter Daten,
- unplausible Daten, z.B. erkannt auf Basis bspw. eines Vergleichs mit einem Modell.

Die Figur 3 zeigt in einer Tabelle 1 die Kategorisierung der Netzknoten zu bislang bspw. 11 Typen. Die Figur 3 zeigt die Performance-Abstraktion von Aggregaten/Netzknoten bzw. Funktionseinheiten. Jeder Typ kann eine wohl definierte Menge an Degradationsleveln haben, die in den nachfolgenden Performance-Berechnungen entsprechend berücksichtigt werden. Es können auch mehr oder weniger als 11 Degradationslevel verwendet werden. Entscheidend ist hier nicht die Anzahl der Klassen sondern die Klassenbildung (hier 11) selbst und die begrenzte Zahl an Degradationsstufen pro Klasse.

Beim Aggregattyp wird bspw. in der folgenden Reihenfolge unterschieden in:

- Redundanz in sich selbst,
- Werteredundanz, und
- Kommunikationsstreckenredundanz.

So bedeutet "simplex/single/single-link", dass das betreffende Aggregat bzw. die entsprechende Funktionseinheit nicht redundant ausgeführt wird, dass keine Werteredundanz vorliegt und dass eine einfache Kommunikationsstrecke vorliegt, d.h. ebenfalls keine Redundanz.

Es gibt bspw. keinen Unterschied zwischen Applikation/Anwendung und Funktion, wobei sich Funktion jedoch von Programmfunktion dahin gehend unterscheiden können, dass die Funktion über das Transportmittel (Fahrzeug) verteilt ist und die Programmfunktion in einem Steuergerät, z.B. ECU (Electronic Control Unit) realisiert ist, z.B. als Softwareprogramm oder als Schaltung ohne Prozessor, der ein Programm ausführt.

Cluster ist eine logische Abstraktionsebene.

Eine Applikation wird auf einem Netzknoten ausgeführt. Ein Aggregat ist ein Netzknoten. Es werden hier Performance-Level von Programmfunktionen berechnet, die auf unterschiedlichen Netzknoten redundant ausgeführt werden, Daten von anderen Netzknoten bekommen und an wieder andere Netzknoten schicken.

Schritt 2: Performance-Level von Einzelfunktionen.

Aufgabe: Der Performance-Level der Anwendungs-Software-Komponenten Lenken, Bremsen und Fahren kann auf Basis der Degradationslevel der Aggregate berechnet werden. Ein Aggregat kann eindeutig einem Typ aus dem vorangegangenen Kapitel zugeordnet werden. Auf dieser Basis kann sich so für jedes Aggregat eine spezifische Menge an wohl definierten Degradationsleveln ergeben.

Ziel kann es letztlich sein, den Zusammenhang zwischen dem Performance-Level einer Anwendungs-Software-Komponente und den Degradationsleveln von Aggregaten kompakt, systematisch und maschinenverständlich zu beschreiben. In einer weiteren Abstraktion können die Performance-Level mehrerer Anwendungs-SW(Software)-Komponenten zu einem Cluster-Leistungswert zusammengefasst werden. Diese Indirektion ist aber optional und ermöglicht letztlich ein gemeinsames Master/Slave Umschalten mehrerer Anwendungs-SW-Komponenten als Gruppe, um bspw. wertvolle Rechenzeit zu sparen.

Nachfolgend wird ein Ansatz dargestellt, wie dies mit Hilfe von Matrizen beschrieben werden kann. Wir definieren hierzu folgendes:

$\vec{p}$ **:** sog. Performancevektor

$\vec{X}$ **:** Degradationsmatrix

$\vec{A}$ **:** Abhängigkeitsmatrix

$\vec{K}$ **:** Korrekturmatrix

$\vec{e}$ **:** Identitätsvektor

*y* : Performancelevel der betrachteten Anwendung

Im Zusammenhang gilt:

$$y = \vec{p}^T * \mathrm{sgn}^{AppMa}\left[\left(\left(\vec{X} * \vec{A}^T\right) - \vec{K}\right) * \vec{e}\right] \qquad \text{Formel (1)}$$

wobei sgnAppMa die an Hand der Figur 14 erläuterte Funktion ist.

Im Beispiel soll dieser Zusammenhang nachfolgend erklärt werden.

Schritt a) Aufstellen der Abhängigkeitsmatrix A

Zunächst gilt bspw. für die Funktion Fahren die in der Figur 4 gezeigte Tabelle 2. Die dort verwendeten Symbole haben die folgende Bedeutung von Boolschen Ausdrücken:

- "-" kein Einfluss, d.h. der entsprechende Wert wird an diesen Stellen nicht berücksichtigt,
- "&" UND Verknüpfung, und
- "|" ODER Verknüpfung.

Im Schritt a) wird diese Matrix weiter präzisiert, bis das in der Figur 4 gezeigte Konfigurationsfeld (Tabelle 2) nur noch &-Abhängigkeiten beinhaltet. Dies kann zu der Matrix gemäß der Figur 5 (Tabelle 3) führen. Es können also alle Permutationen explizit notiert werden.

Am Beispiel ergibt sich die Abhängigkeitsmatrix A bzw. A für die Funktion "Fahren" wie in der Tabelle 4 gezeigt, siehe Figur 6. Es kann sich um eine binäre Abbildung handeln, da die Abhängigkeitsmatrix A nur die Werte 0 und 1 enthält. Eine binäre Abbildung ist möglich durch Beseitigung von ODER Verknüpfungen "|" und von Symbolen "X" für Aggregate bzw. Degradationslevel von Aggregaten, die keinen Einfluss auf das betreffende Performancelevel haben.

Für die Bestimmung des Performance-Wertes kann das in der Figur 8 bzw. der Tabelle 5 gezeigte Regelwerk gelten. Dieses Regelwerk kann applikationsunabhängig bspw. für die folgenden Applikationen gelten:

- Fahren, und/oder

- Bremsen, und/oder
- Lenken, und/oder
- Assistenz: wie ABS (Antiblockiersystem) und/oder ESP (Elektronisches Stabilisierungsprogramm) und/oder vollautomatisches Fahren.

Schritt b) Ableiten der Degradationsmatrix

Die Degradationsmatrix X kann sich aus zyklisch, bspw. in einem Intervall kleiner als 50 Millisekunden, kleiner als 10 Millisekunden oder kleiner als 5 Millisekunden, in der RTE (Run Time Environment bzw. Laufzeitumgebung) berechneten Degradationsleveln eines Aggregats zusammensetzen. Dabei kann bspw. davon ausgegangen werden, dass für jeden Degradationslevel eines Aggregates eine gesonderte Variable verwendet wird, welche z.B. die Werte 0 und 1 haben kann.

Die Spalten der Degradationsmatrix X bzw. $\vec{X}$ repräsentieren die für die Bestimmung der Abhängigkeitsmatrix relevanten Degradationslevel der Aggregate. In Figur 5 ist die Bedeutung der Spalten am Beispiel dargestellt und mittels eines Rahmens verdeutlicht. Die Figur 10 zeigt einen Ausschnitt der Degradationsmatrix X. In der Degradationsmatrix X bzw. $\vec{X}$ werden die in der Software (SW) verfügbaren Größen zur Beschreibung des Degradationslevels von virtuellen Aggregaten bspw. folgendermaßen bezeichnet:

```
Var(degLevel(i)).virtAgg(k)                    Formel (2)
```

Diese Degradationen ergeben sich bspw. aus einer Variablen degradationLevel vom Typ attribute_performanceLevel_t in einer Struktur AggregateStatus_t.

Es ergibt sich die in der Tabelle 6 bzw. der Figur 9 gezeigte Zuordnung zwischen dem Dezimalwert der Variablen degradationLevel und dem zugehörigen DegLevel für die oben festgelegten Aggregatklassen, wobei ein "X" bspw. dem Wert "1" entspricht und ein "-" dem Wert 0.

Die Aggregate können in der RTE (Run Time Environment) konfiguriert sein. Jedes Ein- und Ausgangsdatum einer Applikation(i) kann genau einem Aggregat zugewiesen werden.

Am Beispiel ergibt sich die Degradationsmatrix X für die Funktion Fahren wie in der Figur 10 für einen Ausschnitt der Degradationsmatrix X dargestellt. Die nicht dargestellten Spalten enthalten die folgenden Belegungen:

- VirtAgg_Rad_HL, Deg0, Deg1 - single link, DegN -> var(degLevel0).virtAgg(Rad_HL), var(degLevel1).virtAgg(Rad_HL) bzw. var(degLevelN).virtAgg(Rad_HL),
- VirtAgg_Rad_HR, Deg0, DegN - single link, DegN -> var(degLevel0).virtAgg(Rad_HR), var(degLevel1).virtAgg(Rad_HR) bzw. var(degLevelN).virtAgg(Rad_HR),
- optional, falls zentraler Antriebsmotor: VirtAgg_Antriebsmotor, Deg0, DegN - unavailable (nicht verfügbar) -> var(degLevel0).virtAgg(Antriebsmotor), var(degLevelN).virtAgg(Antriebsmotor),
- Applikation "Fahren", Deg0 (Running), DegN (Isolated) -> var(degLevel0).virtAgg(Applikation_Fahren), var(degLevelN).virtAgg((Applikation_Fahren).

Hierbei gilt, dass in jeder Spalte der Degradationsmatrix X nur der Wert 1 oder nur der Wert 0 stehen kann, was unten an Hand der Figuren 12 und 13 noch näher erläutert wird.

Schritt c) Extraktion des Performance-Vektors

Im dritten Schritt lässt sich der Performance-Vektor p bzw. $\vec{p}$ bspw. aus der initialen Tabelle 4 bzw. aus Figur 6 ablesen, wie in der Figur 11 (Tabelle 7) gezeigt ist.

Schritt d) Ableiten der Korrekturmatrix K bzw. $\vec{K}$

Berechnet man

$$\vec{C} = \left(\vec{X} * \vec{A}^T\right) \qquad \text{Formel (3)}$$

so entsteht eine Matrix, in welcher bspw. nur die Elemente der Hauptdiagonale interessieren, also alle $c_{ii}$. Die Korrek-

turmatrix K stellt sicher, dass nach Ausführung der Operation

$$\vec{D} = \left(\left(\vec{X} * \vec{A}^T\right) - \vec{K}\right) \qquad \text{Formel (4)}$$

eine Matrix vorliegt, für die nur die Elemente $d_{ii}$ <> (ungleich) 0 sind. Es gilt also:

$$\vec{K} = \begin{bmatrix} 0 & \cdots & -\left(\vec{X} * \vec{A}^T\right)_{1n} \\ \vdots & \ddots & \vdots \\ -\left(\vec{X} * \vec{A}^T\right)_{m1} & \cdots & 0 \end{bmatrix} \qquad \text{Formel (5)}$$

Schritt e) - Transfer der Matrix D bzw. $\left(\left(\vec{X} * \vec{A}^T\right) - \vec{K}\right)$ zu einem Vektor

Bevor der gültige Performance-Wert $p_i$ aus $\vec{p}$ extrahiert werden kann, kann die Matrix $\left(\left(\vec{X} * \vec{A}^T\right) - \vec{K}\right)$ in einen Vektor überführt werden. Dadurch, dass $\left(\left(\vec{X} * \vec{A}^T\right) - \vec{K}\right)$ nur noch die Elemente $d_{ii}$ <> (ungleich) 0 sind, genügt bspw. die Multiplikation mit dem "Identitätsvektor" $\vec{e}$. Es gilt:

$$\vec{e} = \begin{matrix} 1 \\ 1 \\ \vdots \end{matrix} \qquad \text{Formel (6)}$$

Daraus folgt:

$$\operatorname{sgn}^{AppMa}\left[\left(\left(\vec{X} * \vec{A}^T\right) - \vec{K}\right) * \vec{e}\right] = \vec{p}^T * \begin{pmatrix} \operatorname{sgn}^{AppMa}(d_{11}) \\ \operatorname{sgn}^{AppMa}(d_{22}) \\ \vdots \end{pmatrix} \qquad \text{Formel (7)}$$

$$\operatorname{sgn}^{AppMa}(x) := \begin{cases} 1, \mathit{falls x = Zahl\ der\ virtuellen\ Aggregate\ zu\ Appli(i)} \\ 0, \mathit{sonst} \end{cases} \qquad \text{Formel (8)}$$

Schritt f) - Extraktion des aktuell gültigen Performancewerts bzw. Performancelevelwertes der betrachteten Applikation(i)

Der letztlich aktuell vorliegende Performancelevel zu der Applikation(i) ergibt sich final zu:

$$y = \vec{p}^T * \operatorname{sgn}^{AppMa}\left[\left(\left(\vec{X} * \vec{A}^T\right) - \vec{K}\right) * \vec{e}\right] = \vec{p}^T * \begin{pmatrix} \operatorname{sgn}^{AppMa}(d_{11}) \\ \operatorname{sgn}^{AppMa}(d_{22}) \\ \vdots \end{pmatrix} \qquad \text{Formel (9)}$$

wobei sich in den Elementen d11 bis dnn nur einmal der Wert 1 befindet und alle anderen Werte 0 sind.

Es kann also eine Korrekturmatrix K verwendet werden, insbesondere um eine geschlossene mathematische Darstellung zu erhalten. Alternativ wird keine Korrekturmatrix K verwendet, so dass die Schritte e) und f) entfallen können. Die Elemente d11 bis dnn können dann direkt der Matrix C entnommen werden, bspw. der Hauptdiagonalen oder auch aus einer Zeile.

Schritt 3: Performance-Level von Funktionsclustern/Partition

Aufgabe: Die Aufgabe von "APPLICLUSTER Performance Calculation" kann darin bestehen, auf Basis der Performance aller Anwendungs-Software-Komponenten eines APPLICLUSTERs einen einzigen Performance-Wert des gesamten Performanceclusters PC zu berechnen.

Grundlegendes Vorgehen: Die Herausforderung besteht darin, eine im Rahmen des Plug and Play (PnP) erweiterbare Methode zu finden, um den Performance-Level einer Mehrzahl an Anwendungs-Software-Komponenten auf einen Performancelevel eines APPLICLUSTERs zu übertragen.

Für eine Erstimplementierung kann die folgende Strategie verfolgt werden:

Tabelle 8

| Performancelevel eines Performanceclusters | Auswahlkriterium |
|---|---|
| GREEN (Grün) | Alle Applikationen(i) des Performanceclusters PC(j) sind mit voller Performance verfügbar. |
| YELLOW1 (Gelb1) | Eine weniger wichtige Applikation(i) aus dem Performancecluster (j) hat für mindestens ein Aggregat/Funktionseinheit eine reduzierte Verfügbarkeit (YELLOW3 oder YELLOW4) |
| YELLOW2 (Gelb2) | Eine zweitwichtigste Applikation(i) aus dem Performancecluster (j) hat für mindestens ein Aggregat/Funktionseinheit eine reduzierte Verfügbarkeit (YELLOW3 oder YELLOW4) |
| YELLOW3 (Gelb3) | Eine wichtigste Applikation(i) aus dem Performancecluster (j) hat für mindestens ein Aggregat/Funktionseinheit eine reduzierte Verfügbarkeit (YELLOW3 oder YELLOW4) ODER eine weniger wichtige Applikation hat die Verfügbarkeit YELLOW5, d.h. fehlendes Aggregat aber keine kundenerlebbare Degradation und kein Fahrmissionsabbruch |
| YELLOW4 (Gelb4) | mehr als eine Applikation(i) aus dem Performancecluster(i) hat für mindestens ein Aggregat eine reduzierte Verfügbarkeit (YELLOW3 oder YELLOW4),<br>ODER zweitwichtigste Applikation(i) hat Performancelevel YELLOW5, d.h. fehlendes Aggregat aber keine kundenerlebbare Degradation und kein Fahrmissionsabbruch,<br>ODER eine weniger wichtige Applikation(i) hat Performancelevel YELLOW6, d.h. fehlendes Aggregat mit kundenerlebbarer Degradation und kein Fahrmissionsabbruch |
| YELLOW5 (Gelb5) | wichtigste Applikation(i) hat Performancelevel YELLOW5, d.h. fehlendes Aggregat aber keine kundenerlebbare Degradation und kein Fahrmissionsabbruch,<br>ODER zweitwichtigste Applikation(i) hat fehlendes Aggregat mit kundenerlebbarer Degradation und keinem Fahrmissionsabbruch |
| YELLOW6 (Gelb6) | wichtigste Applikation(i) hat Performancelevel YELLOW6, d.h. fehlendes Aggregat mit kundenerlebbarer Degradation und kein Fahrmissionsabbruch,<br>ODER eine weniger wichtige Applikation(i) hat YELLOW7 oder YELLOW8,<br>ODER für alle weniger wichtigen anderen Applikationen liegt ein Performancelevel schlechter als YELLOW6 vor, d.h. Abbruch der Wartungsmission |
| YELLOW7 (Gelb7) | wichtigste Applikation(i) hat YELLOW7, d.h. Abbruch der Wartungsmission,<br>ODER zweitwichtigste Applikation(i) hat YELLOW7 oder YELLOW8,<br>ODER für alle weniger wichtigen anderen Applikationen(i) liegt eine Performance YELLOW9 vor |
| YELLOW8 (Gelb8) | wichtigste Applikation(i) hat YELLOW8, d.h. zweite Performance-Verschlechterung,<br>ODER zweitwichtigste Applikation(i) hat YELLOW9, d.h. Abbruch der Fahrmission,<br>ODER für eine weniger wichtige Applikation(i) liegt eine Performance RED vor |
| YELLOW9 (Gelb9) | wichtigste Applikation(i) hat YELLOW9, ODER zweitwichtigste Applikation(i) hat Performance RED |

(fortgesetzt)

| Performancelevel eines Performanceclusters | Auswahlkriterium |
|---|---|
| RED (Rot) | Die wichtigste Applikation(i) bzw. eine der wichtigsten Applikationen(i) hat eine maximale Degradation. |

Hierbei sind i und j natürliche Zahlen 1, 2, 3 usw. Es kann auch mehrere wichtigste Applikationen und/oder mehrere zweitwichtigste Applikationen geben.

Da nach den oben stehenden Definitionen in Tabelle 8 mehrere Performance-Level eines Clusters zutreffen können, wird für alle weiteren Betrachtungen das schlechteste Performance-Level (PL) verwendet und die anderen Performance-Level werden verworfen. Es wird also eine so genannte WORST() Funktion angewendet.

Die Bestimmung des Performance-Levels eines Performance-Clusters PC folgt bspw. dem in der Figur 15 (Tabelle 9) dargestellten Prinzip. Dabei können die folgenden Degradationsinformationen verwendet werden:

- Eine Applikation(i) kann die maximale Degradation haben, wenn sie nicht ausführbar ist oder ihre DL-Appli (Direct-Law) bzw. DL-Applikation ausgeführt wird. Die DL-Applikation ist eine Ersatzapplikation, für den Fall, dass die eigentliche, sog. Normal-Law Appli, einen genau ihr zuzuordnenden Fehler verursacht hat. Eine Direct-Law Applikation ist sehr einfach implementiert und kann für den Fahrer einen Trainingsfall darstellen, genügt jedoch eben einem trainierten Fahrer das Fahrzeug noch sicher anhalten zu können.
- "reduzierte Verfügbarkeit einer Applikation(i)" kann bedeuten, dass deren Performance besser oder gleich als YELLOW4 ist.

Es können sowohl für die Applikationen als auch für die Cluster auch andere Festlegungen für die Performancelevel verwendet werden, insbesondere eine abweichende Anzahl von Performanceleveln.

Es wird also ein systematisches Verfahren zur Abstraktion einer funktionsspezifischen Information in eine funktionsunspezifische generische also vergleichbare beschrieben. Die Abstraktion kann aus Bewertungstabellen sowie aus Verfahren/Transferfunktionen gemäß den oben stehenden und den unten folgenden Erläuterungen bestehen. Dort finden sich auch die Bewertungstabellen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung. Sofern in dieser Anmeldung der Begriff "etwa" verwendet wird, bedeutet dies, dass auch der exakte Wert offenbart ist.

Die Figuren sind nicht maßstabsgerecht gezeichnet, insbesondere können die Aspektverhältnisse der Elemente anders gewählt werden.

Im Folgenden werden Ausführungsbeispiele der Erfindung an Hand der beiliegenden Zeichnungen erläutert. Darin zeigen:

Figur 1 Funktionseinheiten bzw. Aggregate in einem Auto,

Figur 2 zwei zueinander redundante Applikationen aus Funktionseinheiten für die Anwendung "Fahren",

Figur 3 die festgelegten Klassen für die Performance bzw. Leistungsfähigkeit von Aggregaten bzw. Netzknoten,

Figur 4 eine Abhängigkeitsmatrix A gemäß einer ersten Entwurfsstufe,

Figur 5 die Abhängigkeitsmatrix A gemäß einer zweiten Entwurfsstufe,

Figur 6 die Abhängigkeitsmatrix A gemäß einer dritten Entwurfsstufe,

Figur 7 einen Ausschnitt der Abhängigkeitsmatrix A gemäß der dritten Entwurfsstufe,

Figur 8 die Festlegung von Performancelevel für mehrere Applikationen bzw. Anwendungen, die jeweils mehrere Aggregate bzw. Netzknoten enthalten,

Figur 9 eine Zuordnung zwischen dem Dezimalwert der Variablen "degradationslevel" und dem zugehörigen Degradationslevel sowie zu den Klassen von Aggregaten bzw. Netzknoten,

Figur 10 eine Degradationsmatrix für die Funktion bzw. für die Anwendung "Fahren",

Figur 11 einen Performancevektor,

Figur 12 ein erstes Beispiel für die Matrixmultiplikation eines Ausschnitts der Degradationsmatrix X und eines Ausschnitts der Abhängigkeitsmatrix A,

Figur 13 ein zweites Beispiel für die Matrixmultiplikation eines Ausschnitts der Degradationsmatrix X und eines Ausschnitts der Abhängigkeitsmatrix A,

Figur 14 eine Funktion zur Vereinfachung der Elemente der Produktmatrix C,

Figur 15 eine Tabelle, die das Prinzip der Ermittlung des Performancelevels eines Clusters aus mehreren Anwendungen bzw. Applikationen zeigt, und

Figur 16 Verfahrensschritte bei der Ausführung eines Verfahrens zum Ermitteln der Leistungsfähigkeit von Funktionsclustern.

Die Figur 1 zeigt Funktionseinheiten bzw. Aggregate in einem Auto 10. Das Auto 10 ist bspw. ein PKW (Personenkraftwagen) und enthält:

- ein rechtes Vorderrad VR,
- ein linkes Vorderrad VL,
- ein rechtes Hinterrad HR,
- ein linkes Hinterrad HL,
- eine Batterie 12 und (Hybrid)/oder einen Kraftstofftank 12,
- ein Lenkrad 14,
- ein Gaspedal 16,
- zwei Steuereinheiten 18, 18b,
- ein Radaggregat 20 für das rechte Hinterrad HR, d.h. z.B. Elektromotor, Inverter und/oder Steuerelektronik,
- ein Radaggregat 22 für das linke Hinterrad HL, d.h. z.B. Elektromotor, Inverter und/oder Steuerelektronik.

An Stelle der beiden Radnabenmotoren kann auch ein zentraler Antriebs-Motor M, z.B. einen Elektromotor, Verbrennungsmotor oder einen Hybridmotor, verwendet werden. Alternativ können auch vier elektrische Radnabenmotore eingesetzt werden.
Die Steuerung 18 enthält:

- einen Daten-Speicher M1, zum Speichern von Daten und von Programmbefehlen,
- einen Prozessor P, z.B. einen Mikroprozessor oder einen Mikrocontroller, bzw. mehrere Prozessoren,
- eine oder mehrere Programmfunktion(en), z.B. "Fahren", kurz APF, d.h. eine Softwarefunktion.

Alternativ kann die Steuerung 18 auch ohne Programme nur als elektronische Schaltung aufgebaut sein, z.B. unter Verwendung von ASICs (Application Specific Integrated Circuit) oder ähnlichen Schaltung, deren Verdrahtung programmiert werden kann.
Die Steuerung 18 ist als Teil einer zentralen Steuerung dargestellt. Alternativ kann die Steuerung 18 auch Teil einer dezentralen Steuerung sein.
Die Steuerung 18 ist mit einem Bussystem 24 verbunden und bildet somit einen Netzknoten. Das Bussystem 24 ist bspw. ein Ethernet, ein CAN-Netz (Controller Area Network) oder ein Flexray Bus. Alternativ kann auch ein LAN (Local Area Network) als Bussystem 24 verwendet werden, insbesondere ein redundant ausgeführtes LAN, das bspw. auf der logischen Ebene zwei Ringstrukturen bildet.
Es gibt bspw. die folgenden Verbindungen zwischen dem Bussystem 24 und den oben genannten Funktionseinheiten:

- eine Verbindung 30 zum Fahrpedal 16,
- eine Verbindung 32 zum Lenkrad 14,
- eine optionale Verbindung 34 zum optionalen zentralen Motor M,

- eine Verbindung 36 zum Radaggregat 22, und
- eine Verbindung 40 zum Radaggregat 20.

Alternativ kann auch ein Vorderradantrieb oder ein Allradantrieb verwendet werden.
Die Steuerung 18b ist bspw. genauso wie die Steuerung 18 aufgebaut. Die Steuerung 18b ist über ein Bussystem 24b mit den oben erläuterten Einheiten 14, 16, M, 20 und 22 verbunden.
Auch die Spannungsversorgung der in der Figur 1 gezeigten Einheiten kann gedoppelt oder mehrfach redundant ausgeführt werden.
Ein unten an Hand der Figur 2 erläutertes Verfahren oder ein anderes Verfahren bestimmt abhängig von den Leistungswerten/Degradationswerten der Funktionseinheiten 14, 16, M, 20, 22, APF usw., welche Steuerung 18, 18b gerade aktiv sein soll und welche inaktiv ist. Aktiv bedeutet, dass das Fahren durch die aktive Steuerung gesteuert wird. Inaktiv kann bedeuten, dass die betreffende Steuerung ausgeschaltet ist oder dass die betreffende Steuerung arbeit, jedoch die Steuersignale nicht zur momentanen Steuerung des Autos 10 verwendet werden. In diesem Zusammenhang wird auch von einem Master-Servant- bzw. Master-Slave-Verfahren gesprochen. Das Ermitteln von Einzelleistungswerten und von Gesamtleistungswerten wird unten an Hand der Figuren 3 bis 16 erläutert, wobei die Ausführungen nicht zwingend auf die in den Figuren 1 und 2 gezeigten Konfigurationen Bezug nehmen sondern allgemeingültiger sind.
Die Figur 2 zeigt zwei zueinander redundante Applikationen bzw. Anwendungen aus Funktionseinheiten für die Anwendung "Fahren". In der Figur 2 ist in stark vereinfachter Form ein zweikanaliger Radaktuator 50 gezeigt.
Ein erster Aktuatorkanal 54 enthält:

- das Fahrpedal 16, das nicht gedoppelt ist,
- eine Kommunikationsstrecke K1ab, z.B. ein Teil eines Bussystems, zwischen dem Fahrpedal 16 und einer Datenverarbeitungsanlage bzw. Steuereinheit DVAa bzw. 18,
- eine Kommunikationsstrecke K2ab, z.B. ein Teil eines Bussystems, zwischen der Steuereinheit DVAa und den Radaggregaten 20, 22, die ebenfalls nicht gedoppelt sind.

Ein zweiter Aktuatorkanal 56 enthält:

- ebenfalls das Fahrpedal 16, das nicht gedoppelt ist,
- die Kommunikationsstrecke K1ab, z.B. ein Teil eines Bussystems, zwischen dem Fahrpedal 16 und einer Datenverarbeitungsanlage bzw. Steuereinheit DVAb bzw. 18b,
- die Kommunikationsstrecke K2ab, z.B. ein Teil eines Bussystems, zwischen der Steuereinheit DVAb und den Radaggregaten 20, 22, die ebenfalls nicht gedoppelt sind.

Der erste Aktuatorkanal 54 ist als Master M aktiv. Der zweite Aktuatorkanal 56 ist bspw. momentan als Slave/Servant oder Diener D eingestuft, d.h. er ist im Moment nicht aktiv, bildet aber eine Rückfallposition für den Fall eines Fehlers im ersten Aktuatorkanal 54.
Die Steuereinheiten DVAa und DVAb führen ständig, z.B. in Zeitintervallen kleiner als 50 Millisekunden eine Statusabfrage bzw. Fehlererfassung 60 bzw. 62 des ersten Aktuatorkanals 54 bzw. des zweiten Aktuatorkanals 56 durch. Auf Grund der Abfrageergebnisse werden dann Einzelleistungswerte für die Aggregate bzw. Netzknoten und Gesamtleistungswerte für die Anwendung/Applikation ermittelt, die den betreffenden Aktuatorkanal 54 bzw. 56 bildet. Dabei kann prinzipiell so vorgegangen werden, wie es unten an Hand der Figuren 3 bis 14 bzw. 3 bis 16 erläutert wird. Mehrere Anwendungen/Applikationen können auch einen Cluster bilden, für den ein Clusterleistungswert ermittelt werden kann, was unten insbesondere an Hand der Figuren 15 und 16 erläutert wird. Aber auch Master/Slave Verfahren ohne Clusterbildung sind möglich.
Die genannten Leistungswerte können entweder in der Steuerung DVAa, in der Steuerung DVAb in beiden Steuerungen DVAa und DVAb redundant oder in einer übergeordneten Steuerung ermittelt werden.
Auf der Datenverarbeitungsanlage (Computer) DVAa können insbesondere die folgenden Programmfunktionen installiert sein:

- Programmfunktion Fahren APFa,
- Programmfunktion Lenken APLa,
- Programmfunktion Bremsen APBa, und ggf.
- weitere Programmfunktion(en) 57a (ABS (Antiblockiersystem), ACC (Automatic Cruising Control), ESP (Elektronisches Stabilitätsprogramm) etc.)

Auf der Datenverarbeitungsanlage (Computer) DVAa können insbesondere die folgenden Programmfunktionen installiert sein:

- Programmfunktion Fahren APFb, die redundant zu APFa ist,
- Programmfunktion Lenken APLb, die redundant zu APLa ist,
- Programmfunktion Bremsen APBb, die redundant zu APBa ist, und ggf.
- weitere Programmfunktion(en) 57b (ABS (Antiblockiersystem), ACC (Automatic Cruising Control), ESP (Elektronisches Stabilitätsprogramm) etc.), die redundant zu 57a sind.

Die Programmfunktion APF bildet bspw. einen Cluster mit nur einer Programmfunktion bzw. ist keinem Cluster zugeordnet. Die Programmfunktionen APL und APB bilden bspw. ein Cluster mit mehreren Programmfunktionen bzw. Funtionseinheitengruppen, was unten näher erläutert wird. Für den Cluster wird ein skalarer Performancelevel berechnet, der dann zur Auswahl von Master M und Diener D (Slave) verwendet wird.

Für diese Programmfunktionen APF, APL, APB, etc. und/oder die von ihnen verwendeten Funktionseinheiten werden die Leistungswerte (Performancelevel), so wie unten näher erläutert, berechnet und in mindestens einer Datenbank oder aus Redundanzgründen in bspw. zwei Datenbanken DBa und DBb gespeichert.

In beiden Datenbanken DBa, DBb können die gleichen Daten gespeichert werden. Die Datenverarbeitungsanlage DVAa, kurz die Anlage DVAa, greift bspw. im Normalfall auf die Datenbank DBa zu. Die Datenverarbeitungsanlage DVAb, kurz die Anlage DVAb, greift bspw. im Normalfall auf die Datenbank DBb zu. Zwischen den Datenbanken DBa und DBb kann ein Abgleich 58 der Daten stattfinden.

Im Zusammenhang mit dem Abgleich 58 der Daten wird bspw. auf die oben erwähnte Dissertation [2] von M. Armbruster verwiesen. Unter Annahme einer vereinfachten Sicht, d.h. ohne Berücksichtigung von bspw. Fragestellungen im Zusammenhang mit einem asynchronen Start und anderen Asynchronitäten, kann gelten, dass die beiden Anlagen DVAa und DVAb unter Zuhilfenahme eines Datenkonsistenzverfahrens dieselbe Sichtweise auf sich selbst und auf alle anderen Einheiten im Netz haben. Sind die Sichtweisen identisch, wird bspw. die Anlage DVAa priorisiert im Vergleich zur Anlage DVAb, d.h. die Anlage DVAa ist dann der Master M.

Zu Abweichungen bei den Sichtweisen und damit zu unterschiedlichen Performancelevels für die Programmfunktionen APF, APL, APB, etc. kann es kommen, wenn bspw. bei der Datenübertragung Abweichungen oder Fehler auf einer logischen Ebene auftreten.

So kann es zwei Datenübertragungsringstrukturen geben, die jeweils die relevanten Funktionseinheiten und die Anlagen DVAa und DVAb enthalten. Insbesondere können die Anlagen DVAa und DVAb über zwei Ringsegmente miteinander verbunden sein. Datenübertragungsrichtungen in den Ringstrukturen können über die Festlegung von Ports, d.h. auf logischer Ebene, erfolgen. Fällt bspw. ein Port aus, so ist die Datenübertragung in der anderen Richtung weiter gegeben, die Sichtweisen der Anlagen DVAa und DVAb können aber dann verschieden sein.

Die Figur 3 zeigt die festgelegten Klassen für die Performance bzw. Leistungsfähigkeit von Aggregaten bzw. Netzknoten in einer Degradationstabelle 100. Die Degradationstabelle 100 hat Spalten 102 bis 108 mit den folgenden Inhalten:

- in Spalte 102 ist ein Kennzeichen (ID Identifikation) für den jeweiligen Aggregattyp enthalten,
- in Spalte 103 ist der Aggregattyp angegeben, wobei die unten erläuterten Redundanzmerkmale berücksichtigt werden,
- in Spalte 104 wird angegeben, ob für den Aggregattyp der betreffenden Zeile der Tabelle 100 ein Degradationslevel 0 festgelegt ist und wie der Degradationslevel definiert ist,
- in Spalte 106 wird angegeben, ob für den Aggregattyp der betreffenden Zeile der Tabelle 100 ein Degradationslevel 1 festgelegt ist und wie der Degradationslevel definiert ist, und
- in Spalte 108 wird angegeben, ob für den Aggregattyp der betreffenden Zeile der Tabelle 100 ein Degradationslevel 2 festgelegt ist und wie der Degradationslevel definiert ist.

In einer nicht dargestellten Spalte ist für alle Aggregattypen ein Degradationslevel N festgelegt, wobei N eine natürliche Zahl ist, die die höchste Degradation angibt, z.B. Dezimalwert 10, siehe auch Figur 9, PL_RED (Performancelevel RED bzw. rot).

Es können auch mehr Spalten oder weniger Spalten und/oder mehr Kennzeichen ID oder weniger Kennzeichen ID festgelegt werden.

Beim Festlegen des Aggregattyps können die folgenden Redundanzmerkmale berücksichtigt werden:

- keine Redundanz einer Funktionseinheit oder Redundanz durch mehrfach vorgesehenen Funktionseinheiten, d.h. für diese Funktion gibt es nur die eine Funktionseinheit,
- keine Werteredundanz oder Werteredundanz bezogen auf eine Funktionseinheit, bspw. werden die Werte mehrmals ermittelt und auch mehrmals übertragen,
- keine Kommunikationsredundanz, insbesondere Kommunikationsstreckenredundanz, oder mehrfache Kommunikationsredundanz, insbesondere Kommunikationsstreckenredundanz.

Eine erste Zeile 110 betrifft bspw. das Kennzeichen ID mit dem Wert 1. Zu diesem Wert gehört bspw. der Aggregattyp "simplex/single/single-link", d.h. keine Redundanz des Aggregats, keine Werteredundanz und keine Kommunikationsredundanz. Der Degradationslevel 0 liegt vor, wenn kein Fehler in diesem Aggregat vorhanden ist. Andere Degradationslevel außer dem Degradationslevel N, insbesondere die Degradationslevel 1 und 2, sind für den Aggregattyp "simplex/single/single-link" nicht definiert.

Eine zweite Zeile 112 betrifft bspw. das Kennzeichen ID mit dem Wert 2. Zu diesem Wert gehört bspw. der Aggregattyp "simplex/single/dual-link", d.h. keine Redundanz des Aggregats, keine Werteredundanz aber doppelte bzw. duale Kommunikationsredundanz. Der Degradationslevel 0 liegt vor, wenn kein Fehler in diesem Aggregat vorhanden ist. Der Degradationslevel 1 liegt vor, wenn ein Kommunikationslink fehlerhaft ist. Der Degradationslevel 2 ist für den Aggregattyp "simplex/single/dual-link" nicht definiert. Die Radaktuatoren 20 ,22 haben bspw. den Aggregattyp mit dem Wert 2, d.h. "simplex/single/dual-link".

Eine dritte Zeile 114 betrifft bspw. das Kennzeichen ID mit dem Wert 3. Zu diesem Wert gehört bspw. der Aggregattyp "simplex/dual/single-link", d.h. keine Redundanz des Aggregats, Werteredundanz und keine Kommunikationsredundanz. Der Degradationslevel 0 liegt vor, wenn kein Fehler in diesem Aggregat vorhanden ist. Andere Degradationslevel außer dem Degradationslevel N, insbesondere die Degradationslevel 1 und 2, sind für den Aggregattyp "simplex/dual/single-link" nicht definiert. Das Fahrpedal 16 hat bspw. den Aggregattyp "simplex/dual/single-link".

In weiteren Zeilen zwischen den Zeilen 114 und einer Zeile 128 treten bspw. noch folgende Werte auf:

- "duplex" für die Aggregatredundanz,
- "dual-dual" für die Wertredundanz,
- "duplex" für die Wertredundanz, und
- "duo-duplex" für die Wertredundanz.

Dabei bedeuten:

- duplex: Werteredundanz mit zwei bitidentischen Werten, - dual: Werteredundanz mit zwei Delta-konsistenten Werten, , d.h. z.B. absoluter Wert (Wert A - Wert B) < Delta, und
- Duo-XXXX: es gibt die XXXX Werteredundanz aus zwei physikalischen Boxen bzw. Einheiten.

Eine vorletzte Zeile 128 hat das Kennzeichen ID gleich 10, den Aggregattyp "duplex/duo-duplex/dual-link", d.h. Redundanz des Aggregats, vierfache (2 Netzknoten mit je 2 Sensorwerten, wobei je zwei Werte pro Netzknoten verglichen werden, nie aber die Werte der zwei Netzknoten untereinander) Werteredundanz und doppelte Kommunikationsredundanz. Die Degradationslevel sind wie folgt definiert:

- Deg-Level 0: kein Fehler,
- Deg-Level 1: Verlust eines Links,
- Deg-Level 2: Verlust eines Sensorpaares.

Eine letzte Zeile 130 betrifft bspw. den Aggregattyp "simplex/duo-triple/dual-link". Die Degradationslevel für diesen Aggregattyp sind noch festzulegen, d.h. tbd (to be defined). Die letzte Zeile 130 kann auch weggelassen werden.

Die Figur 4 zeigt eine Abhängigkeitsmatrix 150a bzw. A gemäß einer ersten Entwurfsstufe. Die Abhängigkeitsmatrix 150a betrifft die Applikation "Fahren". Es gilt die folgende Zuordnung zu bzw. in der Abhängigkeitsmatrix 150a bzw. A:

- die Spalte 152a gibt den Performancelevelwert der betreffenden Zeile 170a bis 186a,
- die Spalte 154a enthält eine verbale Erläuterung des Performancelevels,
- dem Fahrpedal 16 entspricht ein Aggregat "VirtAgg Fahrpedal", siehe die beiden Spalten 158a, die von links nach rechts dem Degradationslevel 0 bzw. N zugeordnet sind,
- dem Radaktuator 22 entspricht ein Aggregat "VirtAgg Rad HL", siehe die drei Spalten 160a, die von links nach rechts dem Degradationslevel 0, 1 bzw. N zugeordnet sind,
- dem Radaktuator 20 entspricht ein Aggregat "VirtAgg Rad HR", siehe die drei Spalten 162a, die von links nach rechts dem Degradationslevel 0, 1 bzw. N zugeordnet sind, und
- dem APF entspricht eine Applikation "Fahren", siehe die beiden Spalten 166a, die von links nach rechts dem Degradationslevel Deg0 ("Running") bzw. DegN ("Isolated") zugeordnet sind.

Eine erste Zeile 170a der Abhängigkeitsmatrix 150a, A betrifft einen Leistungszustand, in dem alle Aggregate verfügbar sind, d.h. es liegt kein Fehler vor. Wie unten an Hand der Figur 8 erläutert wird, liegt damit ein Performancelevel mit dem Wert 10 vor. Ein "&" (UND-Verknüpfungssymbol), insbesondere Element 187a, zeigt an, dass das Aggregat 16 und das Aggregat 22 und das Aggregat 20 und das Programm "Fahren" den Einzel-Degradationslevel Deg0 bzw. "Running" haben. Alle Aggregate 16, 22, 20 und das Programm "Fahren" sind demnach verfügbar.

Eine zweite Zeile 172a der Abhängigkeitsmatrix 150a, A betrifft einen Leistungszustand, in dem mindestens ein Aggregat eine reduzierte Verfügbarkeit hat. Dies entspricht dem Performancelevel mit dem Wert 7 bzw. 6, siehe auch Figur 8. Bspw. hat der Radaktuator 22 bzw. "VirtAgg_Rad_HL" den Degradationslevel 1. Dabei kommt es auf die Zustände Deg0 (Degradationslevel 0) oder Deg1 (Degradationslevel 1) des Radaktuators 20 bzw. "VirtAgg_Rad_HR" an, siehe "|" (ODER Verknüpfung) im Element 188a sowie die daneben liegende ODER Verknüpfung.

Eine dritte Zeile 174a der Abhängigkeitsmatrix 150a, A betrifft ebenfalls den Leistungszustand, in dem mindestens ein Aggregat eine reduzierte Verfügbarkeit hat. Dies entspricht wieder dem Performancelevel mit dem Wert 7 bzw. 6, siehe auch Figur 8. Bspw. hat nun der Radaktuator 20 bzw. "VirtAgg_Rad_HR" den Degradationslevel 1. Dabei kommt es auf die Zustände Deg0 (Degradationslevel 0) oder Deg1 (Degradationslevel 1) des Radaktuators 22 bzw. "VirtAgg_Rad_HL" an, siehe "|" (ODER Verknüpfung) in den ersten beiden Spalten der Spalten 160a, d.h. betreffend die Degradationslevel Deg0 und Deg1 des Radaktuators 22.

Weiterhin sind in der Abhängigkeitsmatrix 150a, A zwei Zeilen 176a und 178a betreffend den Degradationslevel mit dem Wert 5 festgelegt, d.h. ein Aggregat ist nicht verfügbar (DegN), bspw. der Radaktuator 20, wobei es auf die Zustände Deg0 und Deg1 des anderen Radaktuators 22 ankommt, bzw. ist der Radaktuator 22 nicht verfügbar, d.h. DegN, wobei es auf die Zustände Deg0 und Deg1 des Radaktuators 20 ankommt, siehe entsprechende "|" Symbole, in der Zeile 174a bzw. in der Zeile 176a.

In der Abhängigkeitsmatrix 150a, A sind weiterhin drei Zeilen 180a bis 186a festgelegt, die den Degradationslevel 0 betreffen, "d.h. Funktion nicht ausführbar". Dabei werden durch ein Symbol "X", siehe bspw. Element 189a, Zustände bzw. Degradationslevel gekennzeichnet, auf die es ankommt. Die ein "X" (immer auf ein Aggregat bezogen) enthaltenden Zellen bzw. Zeilen sind noch weiter aufzulösen, was unten an Hand der Figur 6 für eine der Zeile 180a entsprechende Zeile 180c und an Hand der Figur 7 für eine der Zeile 186a entsprechende Zeile 186c noch näher erläutert wird. Das Symbol "-" bedeutet, dass ein bestimmter Degradationslevel nicht vorhanden ist.

Beispielsweise ist die Funktion "Fahren" nicht ausführbar, wenn beide Radaktuatoren 22 und 20 den Degradationslevel DegN haben, siehe Zeile 180a, wenn das Fahrpedal 16 den Degradationslevel DegN hat, siehe Zeile 184a oder wenn das Programm "Fahren" im Zustand "isoliert" bzw. "Isolated" ist, siehe Zeile 186a.

Somit hat die Abhängigkeitsmatrix 150a, A im Beispiel zunächst 10 Spalten 158a bis 166a und 8 Zeilen 170a bis 186a.

Bei anderen Ausführungsbeispielen werden die Abhängigkeiten in der Abhängigkeitsmatrix 150a, A anders festgelegt als in der Figur 4 gezeigt, insbesondere unter Verwendung von mehr oder weniger bzw. anderen Aggregaten, Programmen, d.h. (Spalten), und/oder unter Verwendung von mehr oder weniger bzw. anderen Zeilen bzw. Gesamtdegradationsleveln.

Die Figur 5 zeigt die Abhängigkeitsmatrix A gemäß einer zweiten Entwurfsstufe, in der aus der Abhängigkeitsmatrix 150a die Abhängigkeitsmatrix 150b entsteht. Den Spalten 152a bis 166a entsprechen Spalten 152b bis 166b. Der Zeile 170a entspricht eine Zeile 170b. Die ODER Verknüpfungen in der Zeile 172a wurden aufgelöst durch das Ersetzen dieser Zeile 172a durch die ergänzten Zeilen 172b1 und 172b2, wobei in der Zeile 172b1 ein "&" Symbol in der Deg0 Spalte der Spalten 162b steht und in der Zeile 172b2 ein "&" Symbol in der Spalte Deg1 der Spalten 162b. Für Spalte 152b, Zeile 172b2, ergibt sich ein Performancelevelwert von 6, d.h. YELLOW4 - "mehr als ein Aggregat hat eine reduzierte Verfügbarkeit".

Auf ähnliche Art und Weise wurden die ODER-Symbole in den Zeilen 174a, 176a und 178a aufgelöst, siehe ergänzte Zeilen 174b1, 174b2; 176b1, 178b2 bzw. 178b1, 178b2. Für Spalte 152b, Zeile 174b2, ergibt sich wieder ein Performancelevelwert von 6, d.h. YELLOW4 - "mehr als ein Aggregat hat eine reduzierte Verfügbarkeit".

Demzufolge gibt es in der Abhängigkeitsmatrix 150b ein dem Element 187a entsprechendes Element 187b und ein dem Element 189a entsprechendes Matrix-Elemente 189b. Das Element 188b und das rechts daneben liegende Matrixelement, d.h. die ODER Verknüpfungen sind dagegen nicht mehr vorhanden. An ihrer Stelle gibt es nun in den beiden Zeilen 172b1 und 172b2 eine zwei mal zwei Matrix, wobei in jeder Zeile dieser Teilmatrix ein "&" Symbol und "-" bzw. ein "-" Symbol und ein "&" Symbol vorhanden sind. Außerhalb dieser Teilmatrix wurden die Werte aus der Zeile 172a in die Zeilen 172b1 und 172b2 unverändert übernommen. Ähnliches gilt wieder für die anderen ergänzten Zeilen 174b1 bis 178b2.

Die Figur 6 zeigt die Abhängigkeitsmatrix A gemäß einer dritten Entwurfsstufe, bei der aus der Abhängigkeitsmatrix 150b die Abhängigkeitsmatrix 150c entsteht, indem an Stelle der "&" Symbole bspw. der Wert "1" gesetzt wird. An Stelle der Symbole "-" wird bspw. jeweils der Wert "0" gesetzt. Bei einem anderen Ausführungsbeispiel werden gleich die Werte "0" und "1" verwendet ohne auf die ggf. einfacher zu verstehenden Symbole "&" und "-" zurückzugreifen. So entspricht dem Element "&" 187b der Matrix 150b ein Element "1" bzw. 187c in der Matrix 150c.

Den Spalten 152b bis 166b entsprechen Spalten 152c bis 166c. Der Zeile 170b entspricht eine Zeile 170c. Den ergänzten Zeilen 172b1 bis 178b2 entsprechen ergänzte Zeilen 172c1 bis 178c2. Den Zeilen 180b bis 186b entsprechen Zeilen 180c bis 186c, wobei in den Zeilen 180c bis 186c immer noch Symbole "X" vorhanden sind, siehe bspw.

das dem Element 189b entsprechende Elemente 189c.

Diese Symbole "X" werden für die Zeile 180c aufgelöst, indem aus der Zeile 180c zwei neue Zeilen generiert werden, deren Elemente an den Stellen, an denen kein "X" steht, unverändert aus der Zeile 180c übernommen werden. In der ersten neu generierten Zeile wird bspw. an Stelle des "X" im Element 189c eine "1" eingetragen und an Stelle des rechts daneben stehenden "X" eine "0"

Alternativ können die Symbole "X" auch schon in der Abhängigkeitsmatrix 150b in "&" Symbole auf die gleiche Art aufgelöst werden, wobei das Ersetzen der "&" Symbole durch die Werte "1" und der Symbole "-" durch die Werte "0" in einem nächsten Schritt erfolgen kann.

Das Auflösen der Symbole "X" in der Zeile 186c wird unten an Hand der Figur 7 näher erläutert, wobei auf die Spalten 158c, 160c und 162c Bezug genommen wird, in denen die Symbole "X" auftreten. Die Werte "0" und "1" in Zeile 186c, Spalte 166c werden wieder unverändert in alle ergänzten Zeilen übernommen. Auf ähnliche Art werden die Symbole "X" in der Zeile 184c aufgelöst.

Ein Ausschnitt 190 der Abhängigkeitsmatrix 150c enthält die Kreuzungselemente der Spalten 160c, d.h. Radaktuator 22 bzw. VirtAgg_Rad_HL, und der Spalten 162c, , d.h. Radaktuator 20 bzw. VirtAgg_Rad_HR, mit den Zeilen 170c, 172c1 bis 178c2. Der Ausschnitt 190 wird insbesondere in den Figuren 12 und 13 verwendet, um den Fortgang der weiteren Berechnungen auf einfache Art zu erläutern. Im Auto 10 wird üblicherweise die gesamte Abhängigkeitsmatrix A für die weitere Berechnung verwendet, wobei die Abhängigkeitsmatrix A auch wesentlich größer als die Abhängigkeitsmatrix 150c, inklusive der noch aufgelösten Symbole "X" sein kann. Bspw. hat die Abhängigkeitsmatrix A dann mehr als 50 Spalten und/oder mehr als 50 Zeilen.

Die Figur 7 zeigt einen Ausschnitt 196 der Abhängigkeitsmatrix A gemäß der dritten Entwurfsstufe. Der Ausschnitt 196 zeigt die Spalten 158c, 160c und 162c, in denen die Symbole "X" in der Zeile 186c auftraten. Es werden an Stelle der Zeile 186c 18 Zeilen 186c1 bis 186c18 ergänzt, in denen alle Permutation aufgelistet sind, die für die Degradationslevel Deg0, DegN des Fahrpedals 16, die Degradationslevel Deg0, Deg1, DegN des Radaktuators HL,22 sowie für die Degradationslevel Deg0, Deg1, DegN des Radaktuators HR, 20 auftreten können.

So gibt es bspw. in Spalte 162c drei Gruppen für den Wert "1" des Degradationslevels DegN, Deg1 und Deg0 des Radaktuators HR, 20 wobei jede Gruppe jeweils sechs Zeilen enthält. Innerhalb der ersten sechs Zeilen gibt es drei Untergruppen für den Wert "1" des Degradationslevels DegN, Deg1 und Deg0 des Radaktuators HL, 22 wobei jede Untergruppe jeweils zwei Zeilen enthält. Innerhalb jeder Untergruppe unterscheiden sich die Zeilen hinsichtlich des Wertes "1" für das Degradationslevel DegN des Fahrpedals 16 bzw. hinsichtlich des Wertes "1" für den Degradationslevel Deg0 des Fahrpedals 16. Die nicht erwähnten Elemente einer Zeile haben den Wert "0". Die Reihenfolge der Permutationen kann auch von der gezeigten Reihenfolge abweichen, solange alle Permutationen berücksichtigt sind.

Entsprechendes gilt für die sechs Zeilen der zweiten Gruppe (Aggregat HR, 20; Deg1 = 1) und für die sechs Zeilen der dritten Gruppe (Aggregat HR, 20; Deg0 = 1). Drei Punkte am Ende der Zeilen 186c1 bis 186c18 deuten jeweils die Übernahme der Werte "01" aus der Zeile 186c an.

Die Figur 8 zeigt die Festlegung von Performanceleveln für mehrere Applikationen bzw. Anwendungen bzw. Programmfunktionen, die ihrerseits jeweils mehrere Aggregate bzw. Netzknoten enthalten. Die Festlegungen können in Form einer Tabelle 200 oder auf andere Art und Weise getroffen werden.

Die Tabelle 200 enthält Spalten 202 bis 206 mit der folgenden Bedeutung:

- Die Spalte 202 enthält Dezimalwerte der Performancelevel beginnend bspw. bei "10" für den besten Leistungswert bis zu dem Wert "0" für den schlechtesten Leistungswert. Es können auch mehr oder weniger bzw. andere Dezimalwerte und damit Performancelevel PL festgelegt werden.
- Die Spalte 204 enthält eine verständlichere Beschreibung des jeweiligen Performancelevels PL beginnend bei GREEN (grün) für den besten Leistungswert über YELLOW1 bis YELLOW9 (gelb) für mittlere Leistungswerte bis zu RED (Rot) für den schlechtesten Leistungswert bzw. für den größten Degradationslevel. Die Spalte 204 ist optional.
- Die Spalte 206 enthält das Auswahlkriterium bzw. die Auswahlbedingung für das Zutreffen eines bestimmten Performance-levels PC in verbaler Form oder in einer anderen geeigneten Form.

Die Tabelle 200 enthält Zeilen 210 bis 230 mit der folgenden Bedeutung:

- Die Zeile 210 betrifft den Performancelevel GREEN mit dem Wert "10", wobei der Performancelevel GREEN eintritt, wenn alle anderen Applikationen(j) von denen die Applikation(i) abhängt ohne Degradation bzw. ohne Beeinträchtigung verfügbar sind.
- Die Zeile 212 betrifft den Performancelevel YELLOW1 mit dem Wert "9", wobei der Performancelevel YELLOW1 momentan nicht definiert ist und somit weggelassen werden könnte.
- Die Zeile 214 betrifft den Performancelevel YELLOW2 mit dem Wert "8", wobei der Performancelevel YELLOW2 momentan ebenfalls nicht definiert ist und somit weggelassen werden könnte.
- Die Zeile 216 betrifft den Performancelevel YELLOW3 mit dem Wert "7", wobei der Performancelevel YELLOW3 eintritt, wenn ein Aggregat/Netzknoten eine reduzierte Verfügbarkeit hat.

- Die Zeile 218 betrifft den Performancelevel YELLOW4 mit dem Wert "6", wobei der Performancelevel YELLOW4 eintritt, wenn mehr als ein Aggregat/Netzknoten eine reduzierte Verfügbarkeit hat.
- Die Zeile 220 betrifft den Performancelevel YELLOW5 mit dem Wert "5", wobei der Performancelevel YELLOW5 eintritt, wenn mindestens ein Aggregat/Netzknoten ausfällt bzw. fehlt und sich eine Regelgüte bzw. eine Funktionsperformance nicht kundenerlebbar verschlechtert.
- Die Zeile 222 betrifft den Performancelevel YELLOW6 mit dem Wert "4", wobei der Performancelevel YELLOW6 eintritt, wenn mindestens ein Aggregat/Netzknoten ausfällt bzw. fehlt und sich eine Regelgüte bzw. eine Funktionsperformance kundenerlebbar verschlechtert.
- Die Zeile 224 betrifft den Performancelevel YELLOW7 mit dem Wert "3", wobei der Performancelevel YELLOW7 eintritt, wenn mindestens ein Aggregat/Netzknoten ausfällt bzw. fehlt und sich eine Regelgüte bzw. eine Funktionsperformance kundenerlebbar verschlechtert sowie zusätzlich die Applikation(i) die Notwendigkeit einer ungeplanten Wartung meldet, d.h. Abbruch der Fahrmission aber nicht der Wartungsmission.
- Die Zeile 226 betrifft den Performancelevel YELLOW8 mit dem Wert "2", wobei der Performancelevel YELLOW8 eintritt, wenn mindestens ein Aggregat/Netzknoten ausfällt bzw. fehlt und sich eine Regelgüte bzw. eine Funktionsperformance kundenerlebbar mit schlechterer Performance als in dem Performancelevel Yellow6 verschlechtert. Optional kann gefordert sein, dass die Applikation(i) die Notwendigkeit einer ungeplanten Wartung meldet, d.h. Abbruch der Fahrmission aber nicht der Wartungsmission.
- Die Zeile 228 betrifft den Performancelevel YELLOW9 mit dem Wert "1", wobei der Performancelevel YELLOW9 eintritt, wenn mindestens ein Aggregat/Netzknoten ausfällt bzw. fehlt und sich eine Regelgüte bzw. eine Funktionsperformance kundenerlebbar verschlechtert oder die Applikation(i) eine Rotwarnung, d.h. noch nicht Performancelevel RED, ausgibt, d.h. ein Missionsabbruch ist erforderlich.
- Die Zeile 230 betrifft den Performancelevel RED mit dem Wert "0", wobei der Performancelevel RED eintritt, wenn die Applikation(i) nicht ausführbar ist oder DL (siehe die oben stehende Erläuterung) wird ausgeführt oder die Performance ist schlechter als die Performance des Performancelevels YELLOW9.

Somit werden bei der Festlegung der Performancelevel auf Applikationsebene insbesondere die Kriterien Kundenerlebbarkeit und/oder Wartungsmissionsabbruch und/oder Fahrmissionsabbruch berücksichtigt. Bei anderen Ausführungsbeispielen werden die Performancelevel auf andere Art und/oder unter Nutzung anderer Kriterien festgelegt.

Die Figur 9 zeigt eine Zuordnung zwischen dem Dezimalwert der Variablen "degradationslevel" und dem zugehörigen Degradationslevel sowie zu den Klassen von Aggregaten bzw. Netzknoten in einer Tabelle 250. Die Tabelle 250 enthält Spalten 252 bis 276 mit den folgenden Inhalten:

- Die Spalte 252 definiert Variablen PL_GREEN (Performancelevel GREEN), PL_YELLOW1 bis PL_YELLOW9 und eine Variable PL_RED. Der Name der Variablen kann auch PERFORMANCELEVEL_PL_GREEN usw. sein, um beispielsweise einer proprietären Vorgabe der Anmelderin oder einem Standard zu genügen.

- Die Spalte 254 gibt einen Dezimalwert der Variablen an, hier im Bereich von 0 bis 10 beginnend bei PL_GREEN über YELLOW1 bis YELLOW9 bis PL_RED.
- Die Spalte 256 gibt den Wert des Degradationslevels an, hier von 0 bis 9 und N beginnend bei PL_GREEN über YELLOW1 bis YELLOW9 bis PL_RED.
- Die zehn Spalten 258 bis 276 entsprechen in dieser Reihenfolge den zehn Aggregattypen gemäß Figur 3, Zeile 110 bis Zeile 128, beginnend bei "simplex/single/single-link" bis endend bei "duplex/duo-duplex/dual-link".

Die Tabelle 250 enthält die folgenden Zeilen 280 bis 300:

- Die Zeile 280 betrifft die Variable PL_GREEN mit dem Dezimalwert 0 und dem Degradationslevel 0. Alle Aggregattypen können den Degradationslevel 0 haben, siehe Kreuze in allen Spalten 258 bis 276.
- Die Zeile 282 betrifft die Variable PL_YELLOW1 mit dem Dezimalwert 1 und dem Degradationslevel 1. Alle Aggregattypen bis auf die Aggregattypen 1, 3 und 7 können den Degradationslevel 1 haben, siehe Kreuze in den betreffenden Spalten 260, 264 bis 268 sowie 272 bis 276.
- Die Zeile 284 betrifft die Variable PL_YELLOW2 mit dem Dezimalwert 2 und dem Degradationslevel 2. Nur die Aggregattypen 6 und 10 können den Degradationslevel 2 haben, siehe Kreuze in den betreffenden Spalten 268 und 276.
- Die Zeilen 286 bis 298 betreffen die Variablen PL_YELLOW3 bis PL_YELLOW7 mit den Dezimalwerten 3 bis 9 und den Degradationsleveln 3 bis 9. Diese Degradationslevel wurden im Ausführungsbeispiel nicht für die in den Spalten 258 bis 276 betroffenen Aggregattypen festgelegt, so dass die Tabelle 250 in den Zeilen 286 bis 298 in diesen Spalten jeweils das Symbol "-" enthält, was angibt, dass der betreffende Degradationslevel für den betreffenden Aggregattyp nicht verfügbar ist.

- Die Zeile 300 betrifft die Variable PL_RED mit dem Dezimalwert 10 und dem Degradationslevel N. Alle Aggregattypen können den Performancelevel N haben, siehe Kreuze in allen Spalten 158 bis 276.

Am unteren Rand der Tabelle 250 sind die Kennzeichen ID der Aggregattypen für die Spalten 258 bis 276 vermerkt beginnend beim Wert "1" bis zum Wert "10". Damit entspricht die Tabelle 250 im Wesentlichen der in der Figur 3 gezeigten Tabelle, wobei jedoch an Stelle der verbalen Erläuterungen in der Tabelle 250 nur vermerkt ist, ob ein betreffender Degradationslevel definiert worden ist oder nicht. Somit ist die Tabelle 250 durch Maschinen, insbesondere durch Rechenmaschinen, leichter auszuwerten.

Abhängig vom momentanen Zustand eines Aggregats liegt jedoch nur jeweils ein bestimmter Degradationslevel vor.

Bei anderen Ausführungsbeispielen gibt es andere Festlegungen für die Degradationslevel der Aggregatklassen und/oder andere Festlegungen für die Dezimalwerte und/oder die Werte der Degradationslevel. Insbesondere können mehr oder weniger und/oder andere Degradationslevel verwendet werden.

Die Figur 10 zeigt einen Ausschnitt einer Degradationsmatrix X bzw. 350 für die Funktion bzw. für die Anwendung "Fahren". In der Figur 10 sind Spalten 352 und 354 gezeigt, um die Bedeutung der Zeilen der Degradationsmatrix X bzw. 350 zu erläutern. Die Spalte 352 stimmt mit einem Performancevektor p überein, der die Performancelevel für die einzelne Zeilen 370 bis 394 der Degradationsmatrix 350 angibt. Der Performancevektor stimmt auch mit der Bedeutung der Zeilen der Abhängigkeitsmatrix A überein, siehe bspw. Figur 6, Spalte 152c. Die Spalte 354 beschreibt die Bedeutung der einzelnen Performancelevel bzw. einzelnen Zeilen 370 bis 394 verbal, was ebenfalls mit den Beschreibungen bei der ergänzten Abhängigkeitsmatrix A übereinstimmt, siehe bspw. Figur 6, Spalte 154c.

Zu beachten ist, dass der besseren Übersicht wegen die Degradationsmatrix X bzw. 350 in den letzten drei Zeilen 388 bis 394 noch nicht aufgelöst worden ist, so dass hier eigentlich entsprechend mehr Zeilen zu verwenden sind, was oben für die Abhängigkeitsmatrix A bspw. an Hand der Figur 7 eingehend erläutert worden ist.

In einer ersten Spalte 356 der Degradationsmatrix X bzw. 350 werden Werte vermerkt, die das virtuelle Aggregat Fahrpedal, Degradationslevel Deg0, betreffen, siehe bspw. den Wert mit dem Bezugszeichen 396, der durch die Abfrage var(degLevel0).virtAgg(Fahrpedal) ermittelt wird gemäß Formel (2). Es ist bspw. der Wert "1" möglich, wenn momentan dieser Degradationslevel 0 vorliegt. Der Wert "0" wird bei der Abfrage ermittelt, wenn der Degradationslevel 0 nicht vorliegt.

In einer zweiten Spalte 356 der Degradationsmatrix X bzw. 350 werden Werte vermerkt, die das Aggregat Fahrpedal, Degradationslevel DegN, betreffen. Hier wird die Abfrage var(degLevelN).virtAgg(Fahrpedal) verwendet, wieder gemäß Formel (2). Es ist bspw. der Wert "1" möglich, wenn momentan dieser Degradationslevel N vorliegt. Der Wert "0" wird bei der Abfrage ermittelt, wenn der Degradationslevel N nicht vorliegt.

Die weiteren Spalten 360 der Degradationsmatrix X bzw. 350 betreffen:

- VirtAgg_Rad_HL, Deg0, Deg1 - single link, DegN -> var(degLevel0).virtAgg(Rad_HL), var(degLevel1).virtAgg(Rad_HL) bzw. var(degLevelN).virtAgg(Rad_HL),
- VirtAgg_Rad_HR, Deg0, DegN - single link, DegN -> var(degLevel0).virtAgg(Rad_HR), var(degLevel1).virtAgg(Rad_HR) bzw. var(degLevelN).virtAgg(Rad_HR),
- Applikation "Fahren", Deg0 (Running), DegN (Isolated) -> var(degLevel0).virtAgg(Applikation_Fahren), var(degLevelN).virtAgg((Applikation_Fahren).

Die vereinfacht dargestellte Degradationsmatrix X bzw. 350 enthält 12 Zeilen 376 bis 394, die in dieser Reihenfolge den Performanceleveln 10, 7, 6, 7, 6, 5, 5, 5, 5, 0, 0 und 0 zugeordnet sind. Somit gibt es wieder mehrere Zeilen für bestimmte Performancelevel, z.B. 7, 6, 5 und 0, hier jeweils zwei, zwei, vier bzw. drei Zeilen.

Im Ausführungsbeispiel treten innerhalb einer Spalte der Degradationsmatrix X bzw. 350 immer nur die selben Werte auf, d.h. der Wert 0 bzw. der Wert 1. Dennoch werden alle Zeilen verwendet, um eine geschlossene Darstellung bzw. eine einfache Berechung zu gewährleisten.

Bei anderen Ausführungsbeispielen hat die Degradationsmatrix X bzw. 350 mehr als die erwähnten Spalten und Zeilen, bspw. mehr als 50 Spalten und/oder mehr als 50 Zeilen. Bei einem anderen Ausführungsbeispiel kann auch nur ein Degradationsvektor aufgestellt werden, der bspw. der Zeile 370 der Degradationsmatrix X bzw. 350 entspricht.

Die Figur 11 zeigt einen Performancevektor p, der für die in der Figur 10 gezeigte Degradationsmatrix X bzw. 350 gilt, siehe Spalte 352. Der Performancevektor p gilt auch für die Abhängigkeitsmatrix A, siehe Figur 6, Spalte 152c. Tatsächlich enthält der Performancevektor aber mehr Zeilen als dargestellt, da die Abhängigkeitsmatrix A und auch die Degradationsmatrix X ggf. noch um Zeilen erweitert werden, z.B. zum Auflösen der Symbole "X".

Die Figur 12 zeigt ein erstes Beispiel für die Matrixmultiplikation eines Ausschnitts 350d der Degradationsmatrix X und des Ausschnitts 190d der transponierten Abhängigkeitsmatrix A.

Der Ausschnitt 350d der Degradationsmatrix X betrifft einen Teil der Spalten 360, siehe Figur 10, nämlich drei Spalten 402d, 404d und 406d, die den Radaktor HL bzw. 22, und drei Spalten 408d, 410d und 412d, die den Radaktor HR bzw. 20 betreffen. Die Spalten 356 bzw. 358 sind demnach der besseren Übersicht wegen weggelassen worden, können jedoch ebenfalls in die Berechnung einbezogen werden. Gleiches gilt für Spalten 362, die den momentanen Wert des Programms "Fahren" bzw. APF betreffen.

Für die sechs Spalten 402d bis 412d des Ausschnitts 350d gilt:

- in der Spalte 402d haben alle Elemente den Wert "1", d.h. es liegt Degradationslevel Deg0 für den Radaktuator 22, HL vor,
- in der Spalte 404d haben alle Elemente den Wert "0",
- in der Spalte 406d haben alle Elemente den Wert "0",
- in der Spalte 408d haben alle Elemente den Wert "1", d.h. es liegt Degradationslevel Deg0 für den Radaktuator 20, HR vor,
- in der Spalte 410d haben alle Elemente den Wert "0",
- in der Spalte 412d haben alle Elemente den Wert "0".

Der Ausschnitt 190d stimmt bis auf die Vertauschung der Spalten und Zeilen mit dem Ausschnitt 190 überein, siehe Figur 6. Zur besseren Übersicht sind in der Figur 12 den Spalten 160c und 162c entsprechende transponierte Zeilen 160d und 162d dargestellt, die jedoch auf den Ausschnitt 190d beschränkt sind.

Neun Spalten 400d1 bis 400d des Ausschnitts 190d sind in dieser Reihenfolge den Degradationsleveln 10, 7, 6, 7, 6, 5, 5, 5 und 5 zugeordnet und mit den Werten der entsprechenden transponierten Elemente belegt.

Bei der Matrizenmultiplikation wird in bekannter Weise das erste Element der ersten Zeile des Ausschnitts 350d mit dem ersten Element der ersten Spalte 400d1 des Ausschnitts 190d multipliziert. Dazu wird dann das Produkt des zweiten Elements der ersten Zeile des Ausschnitts 350d mit dem zweiten Element der ersten Spalte 400d1 des Ausschnitts 190d addiert usw. für alle Elemente der ersten Zeile des Ausschnitts 350d und der Spalte 400d1. Danach werden auf ähnliche Weise die anderen Elemente der Produktmatrix 450d bzw. C berechnet, siehe auch Formel (3).

Für die neun Spalten 452d bis 468d der Produktmatrix 450d, C gilt:

- in der ersten Spalte 452d haben alle Elemente den Wert "2", siehe bspw. erstes Element 500d in der Hauptdiagonale der Produktmatrix 450d, C,
- in der zweiten Spalte 454d haben alle Elemente den Wert "1", siehe bspw. erstes Element 502d und zweites Element 504d in der Hauptdiagonalen der Produktmatrix 450d, C,
- in der dritten Spalte haben alle Elemente den Wert "0",
- in der vierten Spalte haben alle Elemente den Wert "1",
- in der fünften Spalte haben alle Elemente den Wert "0",
- in der sechsten Spalte haben alle Elemente den Wert "1",
- in der siebten Spalte haben alle Elemente den Wert "0",
- in der achten Spalte haben alle Elemente den Wert "1", siehe bspw. erstes Element 506d und vorletztes Element 508d auf der Hauptdiagonalen,
- in der neunten Spalte 468d haben alle Elemente den Wert "0", siehe bspw. letztes Element 510d auf der Hauptdiagonalen.

Somit können bspw. die Elemente der Hauptdiagonale ausgewertet werden mit der unten an Hand der Figur 14 erläuterten Funktion. Alternativ werden die Hauptdiagonalelemente abgefragt und das Maximum bestimmt, das im Beispiel das Element 500d in der ersten Spalte des Ausschnitts 450d, C ist. Der Wert dieses Elements ist "2" was mit der Anzahl der in dem Ausschnitt 350d berücksichtigten Aggregate übereinstimmt. Alternativ können auch die Elemente einer Zeile der Produktmatrix 450d, C ausgewertet werden, bspw. die Elemente der ersten Zeile. Das Element 500d mit dem Maximum weist über seine Spaltennummer direkt auf den geltenden Performancelevel hin. Im Beispiel trat keine Degradation auf, so dass Performancelevel 9 bzw. vorliegt, der auch der ersten Zeile der Degradationsmatrix X bzw. der ersten Spalte der Abhängigkeitsmatrix A zugeordnet ist.

Wenn über die kompletten Matrizen multipliziert wird, erhöhen sich die Werte in der Produktmatrix 450d bzw. C entsprechend, wobei die maximalen Werte dann der Anzahl von Aggregaten in der Applikation(i) entsprechen, hier z.B. 4, siehe bspw. Figur 4. Auf diese maximale Anzahl ist dann auch die unten an Hand der Figur 14 erläuterte Funktion zur weiteren Berechnung abgestimmt, siehe auch Formel (8).

Die Figur 13 zeigt ein zweites Beispiel für die Matrixmultiplikation eines Ausschnitts 350e der Degradationsmatrix X und des Ausschnitts 190d der Abhängigkeitsmatrix A. Es gelten bis auf die im Folgenden erläuterten Abweichungen die Aussagen zur Figur 12 entsprechend weiter.

Der Ausschnitt 350e der Degradationsmatrix X betrifft wieder einen Teil der Spalten 360, siehe Figur 10, nämlich drei Spalten 402e, 404e und 406e, die den Radaktor HL bzw. 22, und drei Spalten 408e, 410e und 412e, die den Radaktor HR bzw. 20 betreffen. Die Spalten 356 bzw. 358 sind demnach der besseren Übersicht wegen weggelassen worden, können jedoch ebenfalls in die Berechnung einbezogen werden. Gleiches gilt für Spalten 362, die den momentanen Wert des Programms "Fahren" bzw. APF betreffen.

Für die sechs Spalten 402e bis 412e des Ausschnitts 350e gilt:

- in der Spalte 402e haben alle Elemente den Wert "0",
- in der Spalte 404e haben alle Elemente den Wert "0",
- in der Spalte 406e haben alle Elemente den Wert "1", d.h. es liegt Degradationslevel DegN für den Radaktuator 22, HL vor,
- in der Spalte 408d haben alle Elemente den Wert "1", d.h. es liegt Degradationslevel Deg0 für den Radaktuator 20, HR vor,
- in der Spalte 410d haben alle Elemente den Wert "0",
- in der Spalte 412d haben alle Elemente den Wert "0".

Der Ausschnitt 190d stimmt bis auf die Vertauschung der Spalten und Zeilen mit dem Ausschnitt 190 überein, siehe Figur 6. Zur besseren Übersicht sind in der Figur 13 den Spalten 160c und 162c entsprechende transponierte Zeilen 160d und 162d dargestellt, die jedoch auf den Ausschnitt 190d beschränkt sind.

Für die neun Spalten 452e bis 468e der Produktmatrix 450e, C gilt gemäß der oben erläuteten Matrizenmultiplikation:

- in der ersten Spalte 452e haben alle Elemente den Wert "1", siehe bspw. erstes Element 500e in der Hauptdiagonale der Produktmatrix 450e, C,
- in der zweiten Spalte 454d haben alle Elemente den Wert "1", siehe bspw. erstes Element 502e und zweites Element 504e in der Hauptdiagonale der Produktmatrix 450e, C,
- in der dritten Spalte haben alle Elemente den Wert "0",
- in der vierten Spalte haben alle Elemente den Wert "0",
- in der fünften Spalte haben alle Elemente den Wert "0",
- in der sechsten Spalte haben alle Elemente den Wert "0",
- in der siebten Spalte haben alle Elemente den Wert "0",
- in der achten Spalte haben alle Elemente den Wert "2, siehe bspw. erstes Element 506e und vorletztes Element 508e auf der Hauptdiagonalen,
- in der neunten Spalte 468d haben alle Elemente den Wert "1, siehe bspw. letztes Element 510e auf der Hauptdiagonalen.

Somit können bspw. wieder die Elemente der Hauptdiagonale ausgewertet werden mit der unten an Hand der Figur 14 erläuterten Funktion. Alternativ werden die Hauptdiagonalelemente abgefragt und das Maximum bestimmt, das im Beispiel der Figur 13 das Element 508e in der vorletzten bzw. in der achten Spalte des Ausschnitts 450e, C ist. Der Wert dieses Elements ist "2" was wieder mit der Anzahl der in dem Ausschnitt 350e berücksichtigten Aggregate übereinstimmt. Alternativ können auch die Elemente einer Zeile der Produktmatrix 450e, C ausgewertet werden, bspw. die Elemente der ersten Zeile. Das Element mit dem Maximum weist in beiden Fällen über seine Spaltennummer direkt auf den geltenden Performancelevel hin. Im Beispiel der Figur 13 trat eine Degradation DegN am Radaktuator HR auf, so dass Performancelevel 5 vorliegt, der auch der vorletzten Zeile des Ausschnitts 350e der Degradationsmatrix X bzw. der vorletzten bzw. der achten Spalte des Ausschnitts 190d der Abhängigkeitsmatrix zugeordnet ist.

Wenn über die kompletten Matrizen X und A (transponiert) multipliziert wird, erhöhen sich die Werte in der Produktmatrix 450e bzw. C entsprechend, wobei die maximalen Werte dann der Anzahl von Aggregaten in der Applikation(i) entsprechen, hier z.B. 4, siehe bspw. Figur 4. Auf diese maximale Anzahl ist dann auch die unten an Hand der Figur 14 erläuterte Funktion zur weiteren Berechnung abgestimmt, siehe auch Formel (8).

Die Figur 14 zeigt eine Funktion zur Vereinfachung der Elemente der Produktmatrix C für den Fall, dass vier Aggregate berücksichtigt werden. Ein kartesisches Koordinatensystem 550 enthält eine x-Achse 552 und eine dazu orthogonale y-Achse 554. Eine Funktion 556 hat den folgenden Verlauf:

- Funktionswert 0 für alle x-Werte kleiner als 4,
- Funktionswert 1 für den x-Wert 4 und für größere x-Werte, wobei jedoch ggf. Funktionswerte größer als 4 nicht bei den Berechnungen auftauchen.

Bei einer alternativen Funktion 558 gilt:

- Funktionswert 0 für alle x-Werte kleiner als 4,

- Funktionswert 1 für den x Wert 4.

Werden bspw. nur zwei Aggregate berücksichtigt, siehe Figuren 12 und 13, so wird die Funktion entsprechend modifiziert, d.h.:

- Funktionswert 0 für alle x-Werte kleiner als 2,
- Funktionswert 1 für den x Wert 2 bzw. für größere x-Werte als 2.

Die Funktion 558 stimmt mit der Formel (8) überein. Bspw. können nur ganzzahlige x-Werte verwendet werden.
Die Figur 15 zeigt eine Tabelle 560, die das Prinzip der Ermittlung des Performancelevels eines Clusters aus mehreren Anwendungen bzw. Applikationen zeigt.
Es gelten bspw. die Festlegungen der in der Einleitung genannten Tabelle 8 für die Performancelevel eines bestimmten Clusters aus Applikationen.
Die Tabelle 560 macht diese Festlegungen deutlicher. Die Tabelle 560 enthält Spalten 562 bis 570 mit dem folgenden Inhalt:

- die Spalte 562 zeigt Dezimalwerte der Cluster-Performancelevel in absteigender Reihenfolge beginnend bei 10 bis zum Wert 0,
- die Spalte 564 zeigt eine verbale Angabe für einen Performancelevel in der jeweiligen Zeile 580 bis 600 beginnend bei GREEN (grün) über YELLOW1 bis YELLOW9 bis RED,
- die Spalte 566 betrifft den Performancelevel PL der wichtigsten Applikation(i) bzw. Applikationen(i) des Clusters, wobei i eine natürliche Zahl ist,
- die Spalte 568 betrifft den Performancelevel PL der zweitwichtigsten Applikation(i) bzw. Applikationen(i) des Clusters, und
- die Spalte 570 betrifft den Performancelevel PL von weniger wichtigen Applikation(i) bzw. Applikationen(i) des Clusters.

Die Tabelle 560 enthält Zeilen 580 bis 600 mit dem folgenden Inhalten:

- Die Zeile 580 betrifft den Cluster-Performancelevel mit dem Wert 10, d.h. GREEN, wobei den Spalten 566, 568 und 570 die Inhalte "GREEN", "GREEN" und "GREEN" zugeordnet sind, d.h. die wichtigste(n) Applikation(en), die zweitwichtigste(n) Applikation(en) und die weniger wichtigen Applikationen müssen jeweils den Performancelevel "GREEN" haben.
- Die Zeile 582 betrifft den Cluster-Performancelevel mit dem Wert 9, d.h. YELLOW1, wobei nur die Spalte 570 den Inhalt "YELLOW3,4" hat, d.h. die weniger wichtigsten Applikationen haben den Performancelevel YELLOW3 oder YELLOW4.
- Für die Zeilen 584 bis 596 wird auf den in der Figur 15 dargestellten Text verwiesen.
- Die Zeile 598 betrifft den Cluster-Performancelevel mit dem Wert 1, d.h. YELLOW9, wobei die Spalte 566 den Inhalt "YELLOW9" und die Spalte 568 den Inhalt "RED" haben, d.h. die wichtigste(n) Applikation(en) hat bzw. haben den Performancelevel YELLOW9 oder die zweitwichtigste(n) Applikation(en) hat oder haben den Performancelevel "RED".
- Die Zeile 600 betrifft den Cluster-Performancelevel mit dem Wert 0, d.h. RED, wobei nur die Spalte 566 den Inhalt "RED" hat, d.h. die wichtigste(n) Applikation(en) hat bzw. haben den Performancelevel RED.

Pfeile 602, 604 deuten die der Tabelle 560 zu Grunde liegende Systematik an, wonach der Performancelevel der Cluster um so mehr abnimmt, je wichtiger die Applikation ist, die ein bestimmtes Einzel-Performancelevel hat, siehe bspw. den sich über die Zeilen 588, 590 und 592 erstreckenden Pfeil 602 für den Einzel-Performancelevel YELLOW6 und den sich über die Zeilen 596, 598 und 600 erstreckenden Pfeil 604 für den Einzel-Performancelevel RED.
Das Verfahren aus Tabelle 8 bzw. aus Figur 15 kann dazu führen, das für den Clusterperformancewert unterschiedliche Performancelevel berechnet werden können. Es ist dann der kleinste auszuwählen, d.h. der schlechteste (WORST - Funktion) .
Bei anderen Ausführungsbeispielen können andere Festlegungen für die Cluster-Performancelevel verwendet werden. So kann bspw. nur auf die wichtigste(n) Applikation(en) und auf die zweitwichtigste(n) Applikation(en) Bezug genommen werden und/oder es werden mehr oder weniger bzw. andere Cluster-Performancelevel und/oder mehr oder weniger bzw. andere Einzel-Performancelevel verwendet. Die Abfragen gemäß Tabelle 8 bzw. gemäß Tabelle 560 können mit üblichen Programmen oder auf andere Art und Weise durchgeführt werden.
Die Figur 16 zeigt Verfahrensschritte 700 bis 712 bei der Ausführung eines Verfahrens zum Ermitteln der Leistungsfähigkeit von Funktionsclustern. Das Verfahren beginnt in einem Verfahrensschritt 700. Die Verfahrensschritte werden im Folgenden auch kurz als Schritt bezeichnet.

Dem Schritt 700 folgt ein Schritt 702, in welchem für eine Applikation(i) aus mehreren Aggregaten/Netzknoten ein Einzel-Performancelevel a, y1, y2 ermittelt wird, wie oben an Hand der Figuren 1 bis 14 erläutert worden ist. Dabei können die Formeln (1) bis (9) verwendet werden.

In einem dem Schritt 702 folgenden Schritt 704 wird geprüft, ob es noch weitere Applikationen gibt, für die ein Einzel-Performancelevel zu berechnen ist. Ist dies der Fall, so folgt dem Schritt 704 unmittelbar der Schritt 702, wobei i um den Wert 1 erhöht wird.

Sind dagegen die Einzel-Performancelevel für alle Applikationen(i) berechnet worden, so folgt dem Schritt 704 ein Schritt 706. Im Schritt 706 wird der Performancelevel z1a, z1b, ggf. auch z2a, z2b usw. für einen Cluster aus mehreren Applikationen ermittelt, bspw. so wie es oben an Hand der Tabelle 8 sowie der Figur 15 erläutert worden ist. Bei einem anderen Ausführungsbeispiel kann jedoch ohne Clusterung gearbeitet werden. In diesem Fall werden die Gesamtleistungswerte y1, y2 usw. direkt für die Auswahl von Master/Slave verwendet.

In einem dem Schritt 706 folgenden Schritt 708 wird geprüft, ob es noch weitere Cluster gibt, für die ein Cluster-Performancelevel zu berechnen ist. Ist dies der Fall, so folgt dem Schritt 708 unmittelbar der Schritt 706, wobei ein Zählwert zur Angabe des Clusters um den Wert 1 erhöht wird.

Sind dagegen die Cluster-Performancelevel für alle Cluster berechnet worden, so folgt dem Schritt 708 ein Schritt 710. Im Schritt 710 werden die Cluster-Performancelevel für mindestens zwei zueinander redundante Cluster an eine Steuerung übergeben, die bspw. entscheidet, welcher Cluster im Moment der Master Cluster sein soll, das heißt der für den Betrieb eines Transportmittels maßgebliche Cluster. Es kann auch mehrere Paare oder mehrere Gruppen von jeweils zueinander redundanten Clustern geben. Sowohl bei Clusterung als auch bei keiner Clusterung, kann die Steuerung bspw. auch in jedem Kanal 18, 18b implementiert sein. Außerdem entfallen bspw. die Schritte 708 und 706, wenn keine Clusterung durchgeführt wird

Anschließend kann das Verfahren in einem Schritt 712 beendet werden. Bei einem Ausführungsbeipiel wird das Verfahren zyklisch wiederholt, so das nach dem Schritt 710 wieder der Schritt 702 folgt, siehe Pfeil 714. Die Zykluszeit ist bspw. kleiner als 50 Millisekunden.

Die Ausführungsbeispiele sind nicht maßstabsgetreu und nicht beschränkend. Abwandlungen im Rahmen des fachmännischen Handelns sind möglich. Obwohl die Erfindung im Detail durch das bevorzugte Ausführungsbeispiel näher illustriert und beschrieben worden ist, ist die Erfindung durch die Ansprüche und nicht durch die offenbarten Beispiele eingeschränkt und andere Variationen können vom Fachmann hieraus abgeleitet werden, ohne den Schutzumfang der Erfindung zu verlassen. Die in der Einleitung genannten Weiterbildungen und Ausgestaltungen können untereinander kombiniert werden. Die in der Figurenbeschreibung genannten Ausführungsbeispiele können ebenfalls untereinander kombiniert werden. Weiterhin können die in der Einleitung genannten Weiterbildungen und Ausgestaltungen mit den in der Figurenbeschreibung genannten Ausführungsbeispielen kombiniert werden.

## Patentansprüche

1. Verfahren zum Auswählen einer Programmfunktion (APFa, APFb) für das Erbringen einer mehrfach realisierten Funktion (54, 56), insbesondere in einem Fahrzeug (10), Schiff oder in einem Flugzeug,
wobei Abhängigkeiten (A) vermerkt werden oder worden sind zwischen Einzelleistungswerten (Deg0, Deg1) für Funktionseinheiten (16, 20, 22, M, APF), die beim Ausführen der Programmfunktion (APFa, APFb) verwendet werden, und Gesamtleistungswerten (p), die für eine mehrfach realisierte Funktion (54, 56) festgelegt worden sind,
wobei aktuelle Einzelleistungswerte (X) der Funktionseinheiten (16, 20, 22, M, APF) ermittelt werden,
wobei die ermittelten Einzelleistungswerte (X) und die vermerkten Abhängigkeiten (A) zur Ermittlung oder zur Berechnung eines Gesamtleistungswertes (y) für die Funktionseinheiten (16, 20, 22, M, APF) verwendet werden,
und wobei der Gesamtleistungswert (y) oder mindestens ein daraus ermittelter oder berechneter Wert für die Auswahl der Programmfunktion (APFa) oder einer anderen Programmfunktion (APFb) für das Erbringen der mehrfach realisierten Funktion (54, 56) verwendet wird, und
wobei die Einzelleistungswerte (Deg0, Deg1) und die aktuellen Einzelleistungswerte (X) generische, funktionsunspezifische Degradationslevel sind.

2. Verfahren nach Anspruch 1, wobei die Abhängigkeiten in einer Abhängigkeitsmatrix (A) vermerkt werden,
wobei vorzugsweise die Zeilen (170a bis 186a) der Abhängigkeitsmatrix (A) den Gesamtleistungswerten (p) und die Spalten (156a bis 166a) der Abhängigkeitsmatrix (A) den Einzelleistungswerten (Deg0, Deg1) zugeordnet sind,
oder wobei vorzugsweise die Spalten der Abhängigkeitsmatrix (A) den Gesamtleistungswerten (p) und die Zeilen der Abhängigkeitsmatrix (A) den Einzelleistungswerten (Deg0, Deg1) zugeordnet sind,
wobei die Abhängigkeitsmatrix (A) vorzugsweise nur zwei voneinander verschiedene Werte enthält, insbesondere die Werte 0 und 1,

wobei vorzugsweise für mindestens einen Gesamtleistungswert mindesten zwei Zeilen (172b1, 172b2) der Abhängigkeitsmatrix (A) oder mindestens zwei Spalten der Abhängigkeitsmatrix (A) vorgesehen sind,
insbesondere um ODER-Verknüpfungen darzustellen und/oder um Zustände von Funktionseinheiten (16, 20, 22, M, APF) zu berücksichtigen, auf die es für den betreffenden Gesamtleistungswert ankommt.

**3.** Verfahren nach einem der vorhergehenden Ansprüche, wobei mehrere Klassen (ID) von Funktionseinheiten (16, 20, 22, M, APF) festgelegt werden, deren Einzelleistungswerte (Deg0, Deg1) eine klassenspezifische Bedeutung haben,
und wobei vorzugsweise mindestens zwei Funktionseinheiten (16, 20, 22, M, APF) der Funktion (54, 56) zu derselben Klasse (ID) gehören,
und/oder wobei vorzugsweise mindestens zwei Funktionseinheiten (16, 20, 22, M, APF) der Funktion (54, 56) zu voneinander verschiedenen Klassen (ID) gehören,
wobei die Klassen (ID) vorzugsweise beruhend auf mindestens einem, mindestens zwei oder auf allen der folgenden Redundanzmerkmale festgelegt werden oder festgelegt worden sind:

keine Redundanz einer Funktionseinheit (16, 20, 22, M, APF) oder Redundanz durch mehrfach vorgesehenen Funktionseinheiten (16, 20, 22, M, APF),
keine Werteredundanz oder Werteredundanz bezogen auf eine Funktionseinheit (16, 20, 22, M, APF),
keine Kommunikationsredundanz, insbesondere Kommunikationsstreckenredundanz, oder mehrfache Kommunikationsredundanz.

**4.** Verfahren nach einem der vorhergehenden Ansprüche, wobei die Gesamtleistungswerte (p) für mehrere oder für alle Funktionseinheiten (16, 20, 22, M, APF) gleichermaßen festgelegt werden oder festgelegt worden sind,
insbesondere unter Berücksichtigung der Auswirkung eines Fehlers hinsichtlich der Beeinträchtigung von Passagieren und/oder Fracht,
und/oder des Unterschreitens einer Wartungsmission oder eines Wartungsintervalls,
und/oder des Abbruchs einer Fahrt oder einer Fahrmission oder eines Fluges.

**5.** Verfahren nach einem der vorhergehenden Ansprüche, wobei die aktuellen Einzelleistungswerte (Deg0, Deg1) in einer Degradationsmatrix (X) oder in einem Vektor vermerkt werden, wobei vorzugsweise diese Degradationsmatrix (X) oder dieser Vektor nur zwei voneinander verschiedene Werte enthält, insbesondere die Werte 0 und 1.

**6.** Verfahren nach Anspruch 2 und Anspruch 5, wobei die Ermittlung des Gesamtleistungswertes (y) durch Multiplikation der Abhängigkeitsmatrix (A) und der Degradationsmatrix (X) oder durch Multiplikation der Abhängigkeitsmatrix (A) und des Vektors erfolgt.

**7.** Verfahren nach Anspruch 6, wobei die Ermittlung des Gesamtleistungswertes (y) unter Verwendung einer Berechnungsfunktion (556, 558) erfolgt, die für Werte kleiner oder ungleich der Anzahl der Funktionseinheiten (16, 20, 22, M, APF) zu einem ersten Wert definiert ist, insbesondere zu 0, und die für einen Wert gleich dieser Anzahl zu einem zweiten Wert definiert ist, der sich von dem ersten Wert unterscheidet, insbesondere den Wert 1.

**8.** Verfahren nach Anspruch 7, wobei für die Ermittlung des Gesamtleistungswertes (y) ein Vektor (p) verwendet wird, in dem die Gesamtleistungswerte in Übereinstimmung mit den vermerkten Abhängigkeiten (A) vermerkt sind,
wobei vorzugsweise dieser Vektor (p) und ein Vektor oder eine Matrix multipliziert werden, der oder die unter Anwenden der Berechnungsfunktion (556, 558) ermittelt worden ist, und/oder wobei das Verfahren zyklisch ausgeführt wird, vorzugsweise mit einer Zykluszeit kleiner als 50 Millisekunden.

**9.** Verfahren nach einem der vorhergehenden Ansprüche, wobei mindestens eine Funktionseinheit (16, 20, 22, M, APF) ein Netzknoten ist,
und/oder wobei mindestens eine Funktionseinheit die Programmfunktion (APF) selbst ist,
wobei insbesondere eine Funktion (54) für das Fahren vorgesehen ist,
wobei vorzugsweise die Funktion (54) für das Fahren mindestens eine der folgenden Funktionseinheiten enthält,

- eine ein Fahrpedal (16) betreffende Funktion,
- mindestens eine oder mindestens zwei oder mindestens vier ein Rad (HR, HL) betreffende Funktionen (20, 22), die vorzugsweise jeweils eine einen Antriebsmotor betreffende Funktion enthalten,
- ein das Fahren (APF) betreffendes Programm,

wobei insbesondere eine Funktion für das Bremsen vorgesehen ist,

wobei vorzugsweise die Funktion für das Bremsen mindestens eine der folgenden Funktionseinheiten enthält,
- ein Aggregat zum Auslesen des Fahrerbremswunsches am Bremspedal,
- ein Aggregat zur Ansteuerung der Bremshydraulik,
- vorzugsweise mindestens zwei Aggregate, elektrisch angetriebenes Rad, welche auch zum Bremsen verwendet werden können,
- eine Programmfunktion mit der Aufgabe den vom Fahrer gewünschten Bremsbefehl in eine Soll-Bremsvorgabe für das Rad vorzugsweise hinten rechts oder vorzugsweise hinten links sowie den Netzknoten zur Ansteuerung der Hydraulikbremse umzurechnen,
wobei insbesondere eine Funktion für das Lenken vorgesehen ist,
wobei vorzugsweise die Funktion für das Lenken mindestens eine der folgenden Funktionseinheiten enthält,
- Ansteuerung eines Lenkstellers und Ausgabe der Ist-Lenkposition,
- Auswertung des Soll-Lenkwinkels am Lenkrad,
- Programmfunktion Stellervorgabe = f(Ist-Lenkwinkel, Soll-Lenkwinkel),
wobei insbesondere eine Funktion für eine Assistenzfunktion vorgesehen ist, insbesondere für ein ABS, für ein ESP oder für das vollautomatische Fahren.

**10.** Verfahren nach einem der vorhergehenden Ansprüche, wobei Clusterleistungswerte (564) für mehrere oder für alle Funktionen gleichermaßen festgelegt werden oder festgelegt worden sind,
wobei vorzugsweise mindestens eine, mindestens zwei oder alle der folgenden Klassen berücksichtigt werden:

wichtigste Funktion (54, 56) oder wichtigste Funktionen, zweitwichtigste Funktion oder zweitwichtigste Funktionen, weniger wichtige Funktion oder weniger wichtige Funktionen, insbesondere unter Berücksichtigung der Auswirkung eines Fehlers hinsichtlich der Beeinträchtigung von Passagieren und/oder Fracht,
und/oder des Unterschreitens einer Wartungsmission oder eines Wartungsintervalls,
und/oder des Abbruchs einer Fahrt oder Fahrmission oder eines Fluges.

**11.** Verfahren nach Anspruch 10, wobei ein Clusterleistungswert (564) für mehrere Funktionen eines Clusters ermittelt wird, insbesondere über Abfragen (560), vorzugsweise über WENN DANN Abfragen oder über CASE Abfragen.

**12.** Vorrichtung, insbesondere zum Ausführen eines Verfahrens nach einem der Ansprüche 1 bis 11,
mit einer Speichereinheit (M1), in der Abhängigkeiten (A) vermerkt werden oder worden sind zwischen Einzelleistungswerten (Deg0, Deg1) für Funktionseinheiten (16, 20, 22, M, APF), die beim Ausführen einer Programmfunktion (APFa) verwendet werden, und Gesamtleistungswerten (p), die für eine mehrfach realisierte Funktion (54, 56) festgelegt worden sind,
mit einer Ermittlungseinheit (P), die aktuelle Einzelleistungswerte (X) der Funktionseinheiten (16, 20, 22, M, APF) ermittelt,
mit einer weiteren Ermittlungseinheit (P) oder Berechnungseinheit, die die ermittelten Einzelleistungswerte (X) und die vermerkten Abhängigkeiten (A) zur Ermittlung oder zur Berechnung eines Gesamtleistungswertes (y) verwendet (702),
und mit einer Auswahleinheit (P), die den aktuellen Gesamtleistungswert (y) oder mindestens einen daraus ermittelten oder berechneten Wert für die Auswahl der Programmfunktion (APFa) oder einer anderen Programmfunktion (APFb) für das Erbringen der mehrfach realisierten Funktion (54, 56) verwendet, wobei die Einzelleistungswerte (Deg0, Deg1) und die aktuellen Einzelleistungswerte (X) generische, funktionsunspezifische Degradationslevel sind.

**13.** Fahrzeug (10), Schiff oder Flugzeug mit einer Vorrichtung nach Anspruch 12.

## Claims

**1.** Method for selecting a program function (APFa, APFb) for providing a multiply implemented function (54, 56), particularly in a vehicle (10), ship or in an aircraft,
wherein dependencies (A) are or have been recorded between single performance values (DegO, Deg1) for functional units (16, 20, 22, M, APF) that are used for performing the program function (APFa, APFb) and total performance values (p) that have been stipulated for a multiply implemented function (54, 56),
wherein current single performance values (X) of the functional units (16, 20, 22, M, APF) are ascertained,
wherein the ascertained single performance values (X) and the recorded dependencies (A) are used to ascertain or to compute a total performance value (y) for the functional units (16, 20, 22, M, APF),
and wherein the total performance value (y) or at least one value ascertained or computed therefrom is used for selecting the program function (APFa) or another program function (APFb) for providing the multiply implemented function (54, 56), and wherein the single performance values (DegO, Deg1) and the current single performance values (X) are generic, functionally nonspecific degradation levels.

**2.** Method according to Claim 1, wherein the dependencies are recorded in a dependency matrix (A), wherein preferably the rows (170a to 186a) of the dependency matrix (A) are associated with the total performance values (p) and the columns (156a to 166a) of the dependency matrix (A) are associated with the single performance values (Deg0, Deg1), or wherein preferably the columns of the dependency matrix (A) are associated with the total performance values (p) and the rows of the dependency matrix (A) are associated with the single performance values (Deg0, Deg1), wherein the dependency matrix (A) preferably contains only two different values, particularly the values 0 and 1, wherein preferably at least two rows (172b1, 172b2) of the dependency matrix (A) or at least two columns of the dependency matrix (A) are provided for at least one total performance value, particularly in order to represent OR functions and/or in order to take account of states of functional units (16, 20, 22, M, APF) that are crucial for the relevant total performance value.

**3.** Method according to one of the preceding claims, wherein multiple classes (ID) of functional units (16, 20, 22, M, APF) are stipulated whose single performance values (DegO, Deg1) have a class-specific significance, and wherein preferably at least two functional units (16, 20, 22, M, APF) of the function (54, 56) belong to the same class (ID), and/or wherein preferably at least two functional units (16, 20, 22, M, APF) of the function (54, 56) belong to different classes (ID), wherein the classes (ID) are stipulated or have been stipulated preferably on the basis of at least one, at least two or on the basis of all of the following redundancy features:

no redundancy for a functional unit (16, 20, 22, M, APF) or redundancy by virtue of multiply provided functional units (16, 20, 22, M, APF),
no value redundancy or value redundancy with respect to a functional unit (16, 20, 22, M, APF),
no communication redundancy, particularly communication link redundancy, or multiple communication redundancy.

**4.** Method according to one of the preceding claims, wherein the total performance values (p) are stipulated or have been stipulated for multiple or for all functional units (16, 20, 22, M, APF) in equal measure, particularly taking account of the effect of an error in terms of the negative impact on passengers and/or freight, and/or the shortfall below a service assignment or a service interval, and/or the termination of a journey or a driving assignment or a flight.

**5.** Method according to one of the preceding claims, wherein the current single performance values (DegO, Deg1) are recorded in a degradation matrix (X) or in a vector, wherein preferably this degradation matrix (X) or this vector contains only two different values, particularly the values 0 and 1.

**6.** Method according to Claim 2 and Claim 5, wherein the total performance value (y) is ascertained by multiplying the dependency matrix (A) and the degradation matrix (X) or by multiplying the dependency matrix (A) and the vector.

**7.** Method according to Claim 6, wherein the total performance value (y) is ascertained by using a computation function (556, 558) that is defined for values less than or not equal to the number of functional units (16, 20, 22, M, APF) to form a first value, particularly to form 0, and that is defined for a value equal to this number to form a second value, which differs from the first value, particularly the value 1.

**8.** Method according to Claim 7, wherein ascertainment of the total performance value (y) involves the use of a vector (p) in which the total performance values are recorded in accordance with the recorded dependencies (A), wherein preferably this vector (p) and a vector or a matrix that has been ascertained using the computation function (556, 558) are multiplied, and/or wherein the method is performed cyclically, preferably with a cycle time of less than 50 milliseconds.

**9.** Method according to one of the preceding claims, wherein at least one functional unit (16, 20, 22, M, APF) is a network node,

and/or wherein at least one functional unit is the program function (APF) itself,
wherein particularly a function (54) for driving is provided,
wherein preferably the function (54) for driving contains at least one of the following functional units,

- a function relating to an accelerator pedal (16),
- at least one or at least two or at least four functions (20, 22) relating to a wheel (RR, RL) that preferably each contain a function relating to a drive motor,
- a program relating to driving (APF),
wherein particularly a function for braking is provided,
wherein preferably the function for braking contains at least one of the following functional units,
- a unit for reading the driver braking requirement at the brake pedal,
- a unit for actuating the brake hydraulics,
- preferably at least two units, electrically driven wheel, that are also able to be used for braking,
- a program function having the task of converting the brake command required by the driver into a setpoint braking specification for the wheel, preferably at the rear right or preferably at the rear left, and the network node for actuating the hydraulic brake,
wherein particularly a function for steering is provided,
wherein preferably the function for steering contains at least one of the following functional units,
- actuation of a steering controller and output of the actual steering position,
- evaluation of the setpoint steering angle at the steering wheel,
- program function controller specification = f (actual steering angle, setpoint steering angle),
wherein particularly a function for an assistance function is provided, particularly for an ABS, for an ESP or for fully automatic driving.

**10.** Method according to one of the preceding claims, wherein cluster performance values (564) are stipulated or have been stipulated for multiple or for all functions in equal measure,
wherein preferably at least one, at least two or all of the following classes are taken into account:

most important function (54, 56) or most important functions, second most important function or second most important functions, less important function or less important functions, particularly taking account of the effect of an error in terms of the negative impact on passengers and/or freight,
and/or the shortfall below a service assignment or a service interval,
and/or the termination of a journey or a driving assignment or a flight.

**11.** Method according to Claim 10, wherein a cluster performance value (564) is ascertained for multiple functions of a cluster, particularly by means of queries (560), preferably by means of IF THEN queries or by means of CASE queries.

**12.** Apparatus, particularly for performing a method according to one of Claims 1 to 11,
having a memory unit (M1) in which dependencies (A) are or have been recorded between single performance values (Deg0, Deg1) for functional units (16, 20, 22, M, APF) that are used for performing a program function (APFa) and total performance values (p) that have been stipulated for a multiply implemented function (54, 56),
having an ascertainment unit (P) that ascertains current single performance values (X) of the functional units (16, 20, 22, M, APF),
having a further ascertainment unit (P) or computation unit that uses (702) the ascertained single performance values (X) and the recorded dependencies (A) to ascertain or to compute a total performance value (y),
and having a selection unit (P) that uses the current total performance value (y) or at least one value ascertained or computed therefrom for selecting the program function (APFa) or another program function (APFb) for providing the multiply implemented function (54, 56), wherein the single performance values (DegO, Deg1) and the current single performance values (X) are generic, functionally nonspecific degradation levels.

**13.** Vehicle (10), ship or aircraft having an apparatus according to Claim 12.

## Revendications

**1.** Procédé de sélection d’une fonction de programme (APFa, APFb) pour fournir une fonction réalisée plusieurs fois (54, 56), en particulier dans un véhicule (10), un bateau ou un aéronef,
des dépendances (A) étant ou ayant été notées entre des valeurs de performances individuelles (DegO, Deg1) pour des unités fonctionnelles (16, 20, 22, M, APF) qui sont utilisées lors de l'exécution de la fonction de programme (APFa, APFb) et des valeurs de performances globales (p) qui ont été fixées pour une fonction réalisée plusieurs fois (54, 56),
des valeurs de performances individuelles actuelles (X) des unités fonctionnelles (16, 20, 22, M, APF) étant déterminées, les valeurs de performances individuelles déterminées (X) et les dépendances notées (A) étant utilisées pour déterminer ou calculer une valeur de performance globale (y) pour les unités fonctionnelles (16, 20, 22, M, APF), et la valeur de performance globale (y) ou au moins une valeur déterminée ou calculée sur cette base étant utilisée pour la sélection de la fonction de programme (APFa) ou d'une autre fonction de programme (APFb) pour la fourniture de la fonction réalisée plusieurs fois (54, 56) et
les valeurs de performances individuelles (DegO, Deg1) et les valeurs de performances individuelles actuelles (X) étant des niveaux de dégradation génériques non spécifiques à des fonctions.

**2.** Procédé selon la revendication 1, les dépendances étant notées dans une matrice de dépendances (A),
les lignes (170a à 186a) de la matrice de dépendances (A) étant associées préférentiellement aux valeurs de performances globales (p) et les colonnes (156a à 166a) de la matrice de dépendances (A), aux valeurs de performances individuelles (Deg0, Deg1)
ou les colonnes de la matrice de dépendances (A) étant associées préférentiellement aux valeurs de performances globales (p) et les lignes de la matrice de dépendances (A), aux valeurs de performances individuelles (Deg0, Deg1),
la matrice de dépendances (A) ne contenant de préférence que deux valeurs différentes l'une de l'autre, et plus particulièrement les valeurs 0 et 1,
pour au moins une valeur de performance globale étant prévues au moins deux lignes (172bl, 172b2) de la matrice de dépendances (A) ou au moins deux colonnes de la matrice de dépendances (A),
en particulier pour représenter des fonctions OU et/ou prendre en compte des états d'unités fonctionnelles (16, 20, 22, M, APF) qui importent pour la valeur de performance globale concernée.

**3.** Procédé selon l'une des revendications précédentes, plusieurs classes (ID) d'unités fonctionnelles (16, 20, 22, M, APF) étant fixées, dont les valeurs de performances individuelles (DegO, Deg1) ont une signification spécifique à la classe, et
de préférence au moins deux unités fonctionnelles (16, 20, 22, M, APF) de la fonction (54, 56) appartenant à la même classe (ID),
et/ou de préférence au moins deux unités fonctionnelles (16, 20, 22, M, APF) de la fonction (54, 56) appartenant à des classes différentes l'une de l'autre (ID),
les classes (ID) étant ou ayant été fixées préférentiellement sur la base d'au moins une, d'au moins deux ou sur la base de toutes les caractéristiques de redondance suivantes :

pas de redondance d'une unité fonctionnelle (16, 20, 22, M, APF) ou de redondance due à des unités fonctionnelles prévues plusieurs fois (16, 20, 22, M, APF),
pas de redondance de valeurs ou de redondance de valeurs par rapport à une unité fonctionnelle (16, 20, 22, M, APF),
pas de redondance de communication, et plus particulièrement de redondance de trajet de communication, ou de redondance de communication multiple.

**4.** Procédé selon l'une des revendications précédentes, les valeurs de performances globales (p) pour plusieurs ou pour toutes les unités fonctionnelles (16, 20, 22, M, APF) étant ou ayant été fixées de la même manière,
en particulier compte tenu de l'impact d'une erreur en rapport avec l'effet défavorable pour des passagers et/ou du fret, et/ou du sous-dépassement d'une mission de maintenance ou d'un intervalle de maintenance,
et/ou de l'interruption d'un trajet ou d'une mission de déplacement ou d'un vol.

**5.** Procédé selon l'une des revendications précédentes, les valeurs de performances individuelles actuelles (Deg0, Deg1) étant notées dans une matrice de dégradation (X) ou dans un vecteur,
cette matrice de dégradation (X) ou ce vecteur ne contenant de préférence que deux valeurs différentes l'une de l'autre, et plus particulièrement les valeurs 0 et 1.

**6.** Procédé selon la revendication 2 et la revendication 5, la détermination de la valeur de performance globale (y) étant effectuée par multiplication de la matrice de dépendances (A) par la matrice de dégradation (X) ou par multiplication de la matrice de dépendances (A) par le vecteur.

**7.** Procédé selon la revendication 6, la détermination de la valeur de performance globale (y) étant effectuée en utilisant une fonction de calcul (556, 558) qui est définie pour des valeurs inférieures ou non égales au nombre des unités fonctionnelles (16, 20, 22, M, APF) par rapport à une première valeur, et plus particulièrement par rapport à 0, et qui est définie pour une valeur égale à ce nombre par rapport à une deuxième valeur qui est différente de la première valeur, et plus particulièrement la valeur 1.

**8.** Procédé selon la revendication 7, pour la détermination de la valeur de performance globale (y) étant utilisé un vecteur (p) dans lequel les valeurs de performances globales sont notées en conformité avec les dépendances notées (A),
ce vecteur (p) étant préférentiellement multiplié par un vecteur ou une matrice qui ont été déterminés en appliquant la fonction de calcul (556, 558)
et/ou le procédé étant exécuté cycliquement, de préférence avec une durée de cycle inférieure à 50 millisecondes.

**9.** Procédé selon l'une des revendications précédentes, au moins une unité fonctionnelle (16, 20, 22, M, APF) étant un noeud de réseau
et/ou au moins une unité fonctionnelle étant la fonction de programme (APF) elle-même,
une fonction (54) pour la conduite étant plus particulièrement prévue,
la fonction (54) pour la conduite contenant de préférence au moins l'une des unités fonctionnelles suivantes :

- une fonction concernant une pédale d'accélérateur (16),
- au moins une ou au moins deux ou au moins quatre fonctions (20, 22) concernant une roue (HR, HL), lesquelles contiennent de préférence respectivement une fonction concernant un moteur d'entraînement,
- un programme concernant la conduite (APF), une fonction pour le freinage étant plus particulièrement prévue,

la fonction pour le freinage contenant préférentiellement au moins l'une des unités fonctionnelles suivantes :

- un groupe pour lire le souhait de freinage du conducteur au niveau de la pédale de frein,
- un groupe pour commander l'hydraulique de frein,
- de préférence au moins deux groupes, roue entraînée électriquement, qui peuvent également être utilisés pour freiner,
- une fonction de programme avec la tâche de convertir la commande de freinage souhaitée par le conducteur en une valeur cible de freinage pour la roue préférentiellement arrière droite ou préférentiellement arrière gauche, ainsi que le noeud de réseau pour la commande du frein hydraulique,

une fonction de direction étant plus particulièrement prévue, la fonction de direction contenant au moins l'une des unités fonctionnelles suivantes :

- commande d'un bouton de direction et production en sortie de la position de direction réelle,
- évaluation de l'angle de direction de consigne au niveau du volant,
- fonction de programme spécification bouton = f(angle de direction réel, angle de direction de consigne),

une fonction pour une fonction d'assistance étant plus particulièrement prévue, en particulier pour un ABS, pour un ESP ou pour la conduite entièrement automatique.

**10.** Procédé selon l'une des revendications précédentes, des valeurs de performances de cluster (564) étant ou ayant été fixées de la même manière pour plusieurs ou pour toutes les fonctions,
de préférence au moins une, au moins deux des ou toutes les classes suivantes étant prises en compte :

la fonction la plus importante (54, 56) ou les fonctions les plus importantes,
la deuxième fonction la plus importante ou les deuxièmes fonctions les plus importantes,
une fonction moins importante ou des fonctions moins importantes,
en particulier compte tenu de l'impact d'une erreur en rapport avec l'effet défavorable pour des passagers et/ou du fret,
et/ou du sous-dépassement d'une mission de maintenance ou d'un intervalle de maintenance,
et/ou de l'interruption d'un trajet ou d'une mission de déplacement ou d'un vol.

**11.** Procédé selon la revendication 10, une valeur de performance de cluster (564) étant déterminée pour plusieurs fonctions d'un cluster, et plus particulièrement par des questions (560), de préférence par des questions SI ALORS ou des questions CASE.

**12.** Dispositif, en particulier pour exécuter un procédé selon l'une des revendications 1 à 11, comportant :

une unité de mémoire (M1) dans laquelle sont ou ont été notées des dépendances (A) entre des valeurs de performances individuelles (DegO, Deg1) pour des unités fonctionnelles (16, 20, 22, M, APF) qui sont utilisées lors de l'exécution d'une fonction de programme (APFa) et des valeurs de performances globales (p) qui ont été fixées pour une fonction réalisée plusieurs fois (54, 56),
une unité de détermination (P) qui détermine des valeurs de performances individuelles actuelles (X) des unités fonctionnelles (16, 20, 22, M, APF),
une autre unité de détermination (P) ou une unité de calcul qui utilise (702) les valeurs de performances individuelles déterminées (X) et les dépendances notées (A) pour la détermination ou le calcul d'une valeur de performance globale (y),
et une unité de sélection (P) qui utilise la valeur de performance globale actuelle (y) ou au moins une valeur déterminée ou calculée sur cette base pour la sélection de la fonction de programme (APFa) ou d'une autre fonction de programme (APFb) pour la fourniture de la fonction réalisée plusieurs fois (54, 56), les valeurs de performances individuelles (DegO, Deg1) et les valeurs de performances individuelles actuelles (X) étant des niveaux de dégradation génériques non spécifiques à des fonctions.

**13.** Véhicule (10), bateau ou aéronef comportant un dispositif selon la revendication 12.

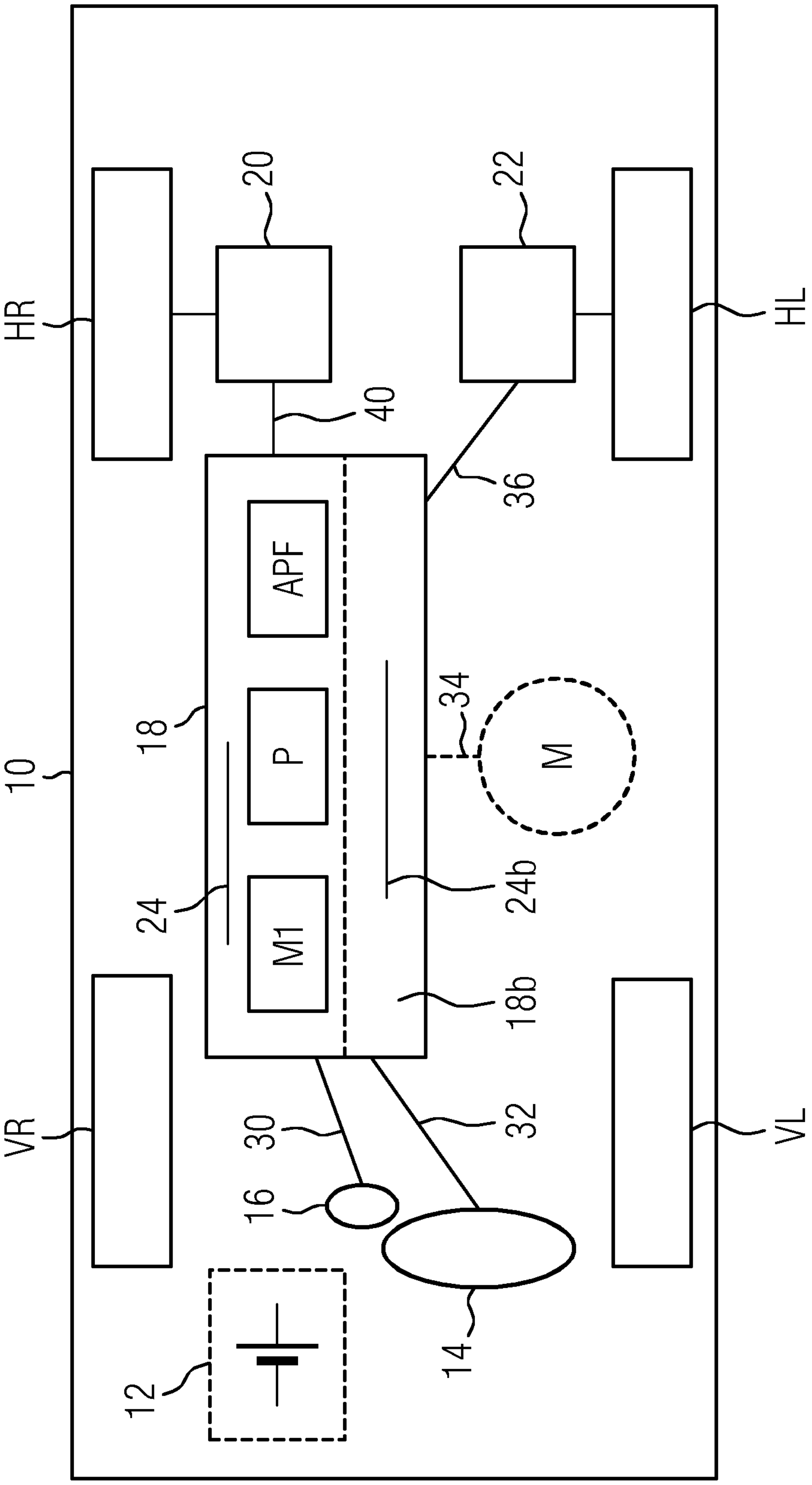


FIG 1

FIG 2

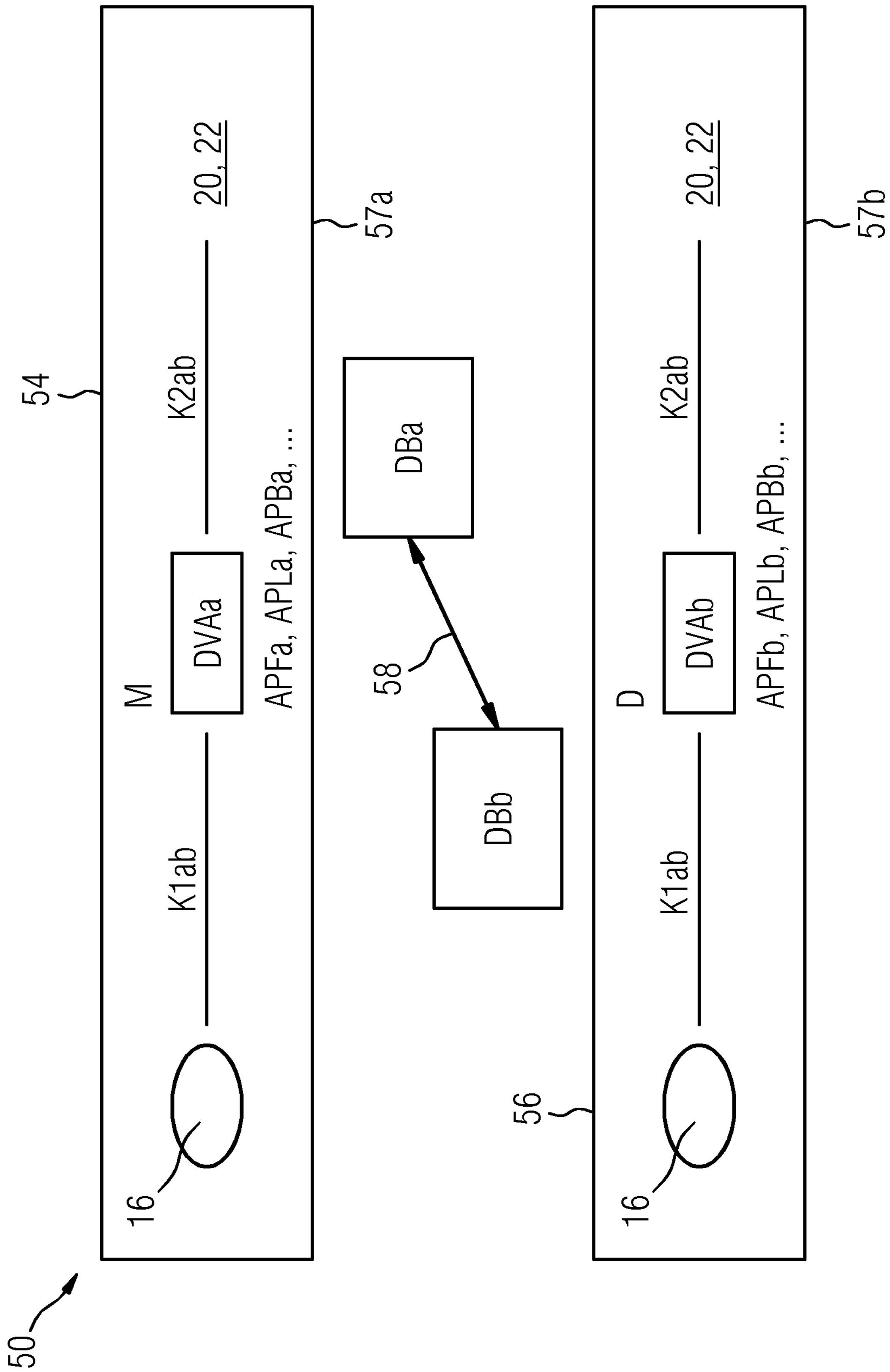
50
54
56
57a
57b
58
M
D
16
K1ab
K2ab
DVAa
DVAb
20, 22
APFa, APLa, APBa, ...
APFb, APLb, APBb, ...
DBa
DBb

FIG 3

100

| | 102 | 103 | 104 | 106 | 108 |
|---|---|---|---|---|---|
| | ID | Aggregattyp | Deg- Level 0 | Deg- Level 1 | Deg- Level 2 |
| 110 | 1 | simplex/single/single-link | Kein Fehler | - | - |
| 112 | 2 | simplex/single/dual-link | Kein Fehler | Verlust eines Links | - |
| 114 | 3 | simplex/dual/single-link | Kein Fehler | - | - |
| | 4 | simplex/dual/dual-link | Kein Fehler | Verlust eines Links | - |
| | 5 | simplex/dual-dual/single-link | Kein Fehler | Verlust eines Sensorpaars | - |
| | 6 | simplex/dual-dual/dual-link | Kein Fehler | Verlust eines Links | Verlust eines Sensorpaars |
| | 7 | duplex/duplex/single-link | Kein Fehler | - | - |
| | 8 | duplex/duplex/dual-link | Kein Fehler | Verlust eines Links | - |
| | 9 | duplex/duo-duplex/single-link | Kein Fehler | Verlust eines Sensorpaars | - |
| 128 | 10 | duplex/duo-duplex/dual-link | Kein Fehler | Verlust eines Links | Verlust eines Sensorpaars |
| 130 | 11 | simplex/duo-triple/dual-link | tbd | tbd | tbd |

FIG 4

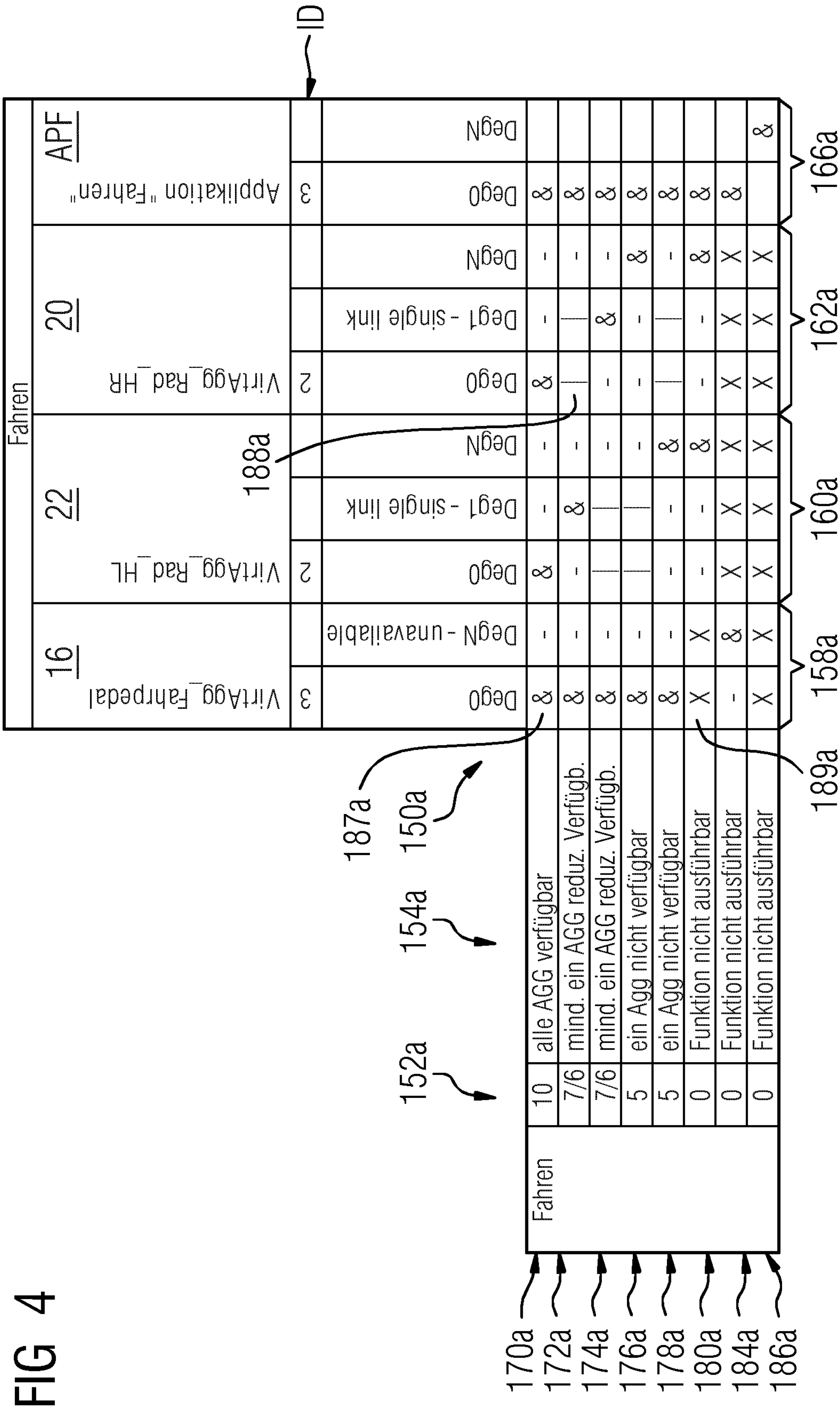
ID
Fahren
VirtAgg_Fahrpedal
16
3
DegO
DegN - unavailable
VirtAgg_Rad_HL
22
2
DegO
Deg1 - single link
DegN
VirtAgg_Rad_HR
20
2
DegO
Deg1 - single link
DegN
Applikation "Fahren"
APF
3
DegO
DegN
188a
187a
150a
154a
152a
189a
158a
160a
162a
166a
Fahren
10 alle AGG verfügbar
7/6 mind. ein AGG reduz. Verfügb.
7/6 mind. ein AGG reduz. Verfügb.
5 ein Agg nicht verfügbar
5 ein Agg nicht verfügbar
0 Funktion nicht ausführbar
0 Funktion nicht ausführbar
0 Funktion nicht ausführbar
170a
172a
174a
176a
178a
180a
184a
186a

FIG 5

Fahren

| | | | 16 VirtAgg_Fahrpedal 3 Deg0 | 16 DegN - unavailable | 22 VirtAgg_Rad_HL 2 Deg0 | 22 Deg1 - single link | 22 DegN | 20 VirtAgg_Rad_HR 2 Deg0 | 20 Deg1 - single link | 20 DegN | APF Applikation "Fahren" 3 Deg0 | APF DegN |
|---|---|---|---|---|---|---|---|---|---|---|---|---|
| 170b Fahren | 10 | alle AGG verfügbar | & | - | & | - | - | & | - | - | & | |
| 172b1 | 7 | ein AGG reduzierte Verfügbarkeit | & | - | - | & | - | & | - | - | & | |
| 172b2 | 6 | mehr als ein AGG reduz. Verfügb. | & | - | - | & | - | - | & | - | & | |
| 174b1 | 7 | ein AGG reduzierte Verfügbarkeit | & | - | & | - | - | - | & | - | & | |
| 174b2 | 6 | mehr als ein AGG reduz. Verfügb. | & | - | - | & | - | - | & | - | & | |
| 176b1 | 5 | ein AGG nicht verfügbar | & | - | & | - | - | - | - | & | & | |
| 176b2 | 5 | ein AGG nicht verfügbar | & | - | - | & | - | - | - | & | & | |
| 178b1 | 5 | ein AGG nicht verfügbar | & | - | - | - | & | & | - | - | & | |
| 178b2 | 5 | ein AGG nicht verfügbar | & | - | - | - | & | - | & | - | & | |
| 180b | 0 | Funktion nicht ausführbar | X | X | - | - | & | - | - | & | & | |
| 184b | 0 | Funktion nicht ausführbar | - | & | X | X | X | X | X | X | & | |
| 186b | 0 | Funktion nicht ausführbar | X | X | X | X | X | X | X | X | | & |

152b 154b 150b 187b 189b 158b 160b 162b 166b ID

FIG 6

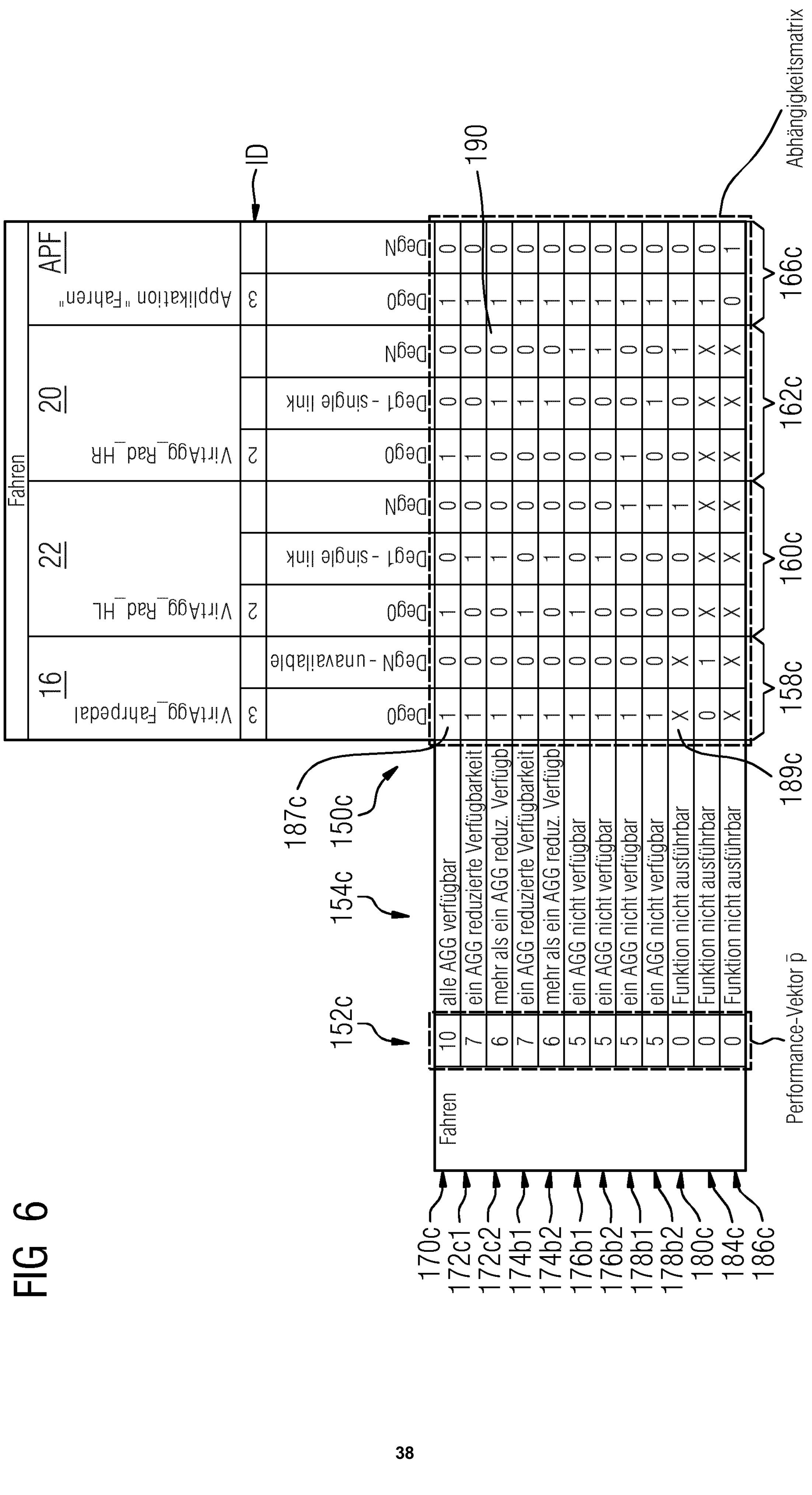
Fahren
16 VirtAgg_Fahrpedal 3
22 VirtAgg_Rad_HL 2
20 VirtAgg_Rad_HR 2
APF Applikation "Fahren" 3
ID
Deg0 | DegN - unavailable | Deg0 | Deg1 - single link | DegN | Deg0 | Deg1 - single link | DegN | Deg0 | DegN
190
Fahren
170c 10 alle AGG verfügbar 1 0 1 0 0 1 0 0 1 0
172c1 7 ein AGG reduzierte Verfügbarkeit 1 0 0 1 0 1 0 0 1 0
172c2 6 mehr als ein AGG reduz. Verfügb 1 0 0 1 0 0 1 0 1 0
174b1 7 ein AGG reduzierte Verfügbarkeit 1 0 1 0 0 0 1 0 1 0
174b2 6 mehr als ein AGG reduz. Verfügb 1 0 0 1 0 0 1 0 1 0
176b1 5 ein AGG nicht verfügbar 1 0 1 0 0 0 0 1 1 0
176b2 5 ein AGG nicht verfügbar 1 0 0 1 0 0 0 1 1 0
178b1 5 ein AGG nicht verfügbar 1 0 0 0 1 1 0 0 1 0
178b2 5 ein AGG nicht verfügbar 1 0 0 0 1 0 1 0 1 0
180c 0 Funktion nicht ausführbar X X 0 0 1 0 0 1 1 0
184c 0 Funktion nicht ausführbar 0 1 X X X X X X 1 0
186c 0 Funktion nicht ausführbar X X X X X X X X 0 1
152c
154c
150c
187c
189c
158c
160c
162c
166c
Performance-Vektor p̄
Abhängigkeitsmatrix

FIG 7

196

| | Fahrpedal 16 | | Rad HL 22 | | | Rad HR 20 | | | |
|---|---|---|---|---|---|---|---|---|---|
| p | Deg0 | DegN | Deg0 | Deg1 | DegN | Deg0 | Deg1 | DegN | ... |
| 0 | 0 | 1 | 0 | 0 | 1 | 0 | 0 | 1 | ... |
| 0 | 1 | 0 | 0 | 0 | 1 | 0 | 0 | 1 | ... |
| 0 | 0 | 1 | 0 | 1 | 0 | 0 | 0 | 1 | ... |
| 0 | 1 | 0 | 0 | 1 | 0 | 0 | 0 | 1 | ... |
| 0 | 0 | 1 | 1 | 0 | 0 | 0 | 0 | 1 | ... |
| 0 | 1 | 0 | 1 | 0 | 0 | 0 | 0 | 1 | ... |
| 0 | 0 | 1 | 0 | 0 | 1 | 0 | 1 | 0 | ... |
| 0 | 1 | 0 | 0 | 0 | 1 | 0 | 1 | 0 | ... |
| 0 | 0 | 1 | 0 | 1 | 0 | 0 | 1 | 0 | ... |
| 0 | 1 | 0 | 0 | 1 | 0 | 0 | 1 | 0 | ... |
| 0 | 0 | 1 | 1 | 0 | 0 | 0 | 1 | 0 | ... |
| 0 | 1 | 0 | 1 | 0 | 0 | 0 | 1 | 0 | ... |
| 0 | 0 | 1 | 0 | 0 | 1 | 1 | 0 | 0 | ... |
| 0 | 1 | 0 | 0 | 0 | 1 | 1 | 0 | 0 | ... |
| 0 | 0 | 1 | 0 | 1 | 0 | 1 | 0 | 0 | ... |
| 0 | 1 | 0 | 0 | 1 | 0 | 1 | 0 | 0 | ... |
| 0 | 0 | 1 | 1 | 0 | 0 | 1 | 0 | 0 | ... |
| 0 | 1 | 0 | 1 | 0 | 0 | 1 | 0 | 0 | ... |

186c1

186c18

158c

160c

162c

FIG 8

200 202 204 206

| | | Performance-Level einer APPLI(i) | Auswahlkriterium |
|---|---|---|---|
| 210 | 10 | GREEN | Alle AGG/ APPLI(j) mit direkter Abhängigkeit zu APPLI(i) sind ohne Degradation verfügbar. |
| 212 | *9* | *YELLOW1* | *nicht definiert* |
| 214 | *8* | *YELLOW2* | *nicht definiert* |
| 216 | 7 | YELLOW3 | ein AGG hat eine reduzierte Verfügbarkeit |
| 218 | 6 | YELLOW4 | mehr als ein AGG haben eine reduzierte Verfügbarkeit |
| 220 | 5 | YELLOW5 | mindestens ein AGG fehlt aber Regelgüte verschlechtert sich nicht kundenerlebbar. |
| 222 | 4 | YELLOW6 | mindestens ein AGG fehlt und Regelgüte/ Funktionsperformance verschlechtert sich kundenerlebbar. |
| 224 | 3 | YELLOW7 | Wie YELLOW6 aber APPLI(i) meldet die Notwendigkeit einer ungeplanten Wartung (Abbruch der Wartungsmission, nicht aber der Fahrmission). |
| 226 | 2 | YELLOW8 | mindestens ein AGG fehlt und Regelgüte/ Funktionsperformance verschlechtert sich kundenerlebbar mit schlechterer Performance als die der Performance-Stufe YELLOW6. Optional: APPLI(i) meldet die Notwendigkeit einer ungeplanten Wartung (Abbruch der Wartungsmission, nicht aber der Fahrmission). |
| 228 | 1 | YELLOW9 | mindestens ein AGG fehlt und Regelgüte/ Funktionsperformance verschlechtert sich kundenerlebbar oder APPLI(i) meldet eine Rotwarnung --> ein Missionsabbruch ist erforderlich. |
| 230 | 0 | RED | APPLI(i) ist nicht ausführbar oder DL wird ausgeführt oder die Performance ist schlechter als die der Performance-Stufe YELLOW8. |

FIG 9

250

| | 252 | 254 | 256 | 258 | 260 | 262 | 264 | 266 | 268 | 270 | 272 | 274 | 276 | |
|---|---|---|---|---|---|---|---|---|---|---|---|---|---|---|
| | | | | simplex/single/sigle-link | simplex/single/dual-link | simplex/dual/single-link | simplex/dual/dual-link | simplex/dual-dual/single-link | simplex/dual-dual/dual-link | duplex/duplex/single-link | duplex/duplex/dual-link | duplex/duo-duplex/single-link | duplex/duo-duplex/dual-link | |
| | #define | Dezimal-Wert | Deg-Level | X | X | X | X | X | X | X | X | X | X | |
| 280 | PL_GREEN | 0 | 0 | - | X | - | X | X | X | - | X | X | X | |
| 282 | PL_YELLOW1 | 1 | 1 | - | - | - | - | - | X | - | - | - | X | |
| 284 | PL_YELLOW2 | 2 | 2 | - | - | - | - | - | - | - | - | - | - | |
| 286 | PL_YELLOW3 | 3 | 3 | - | - | - | - | - | - | - | - | - | - | |
| | PL_YELLOW4 | 4 | 4 | - | - | - | - | - | - | - | - | - | - | |
| | PL_YELLOW5 | 5 | 5 | - | - | - | - | - | - | - | - | - | - | |
| | PL_YELLOW6 | 6 | 6 | - | - | - | - | - | - | - | - | - | - | |
| | PL_YELLOW7 | 7 | 7 | - | - | - | - | - | - | - | - | - | - | |
| | PL_YELLOW8 | 8 | 8 | - | - | - | - | - | - | - | - | - | - | |
| 298 | PL_YELLOW9 | 9 | 9 | - | - | - | - | - | - | - | - | - | - | |
| 300 | PL_RED | 10 | N | - | - | - | - | - | - | - | - | | - | |
| | | | | X | X | X | X | X | X | X | X | X | X | |
| | | | | 1 | 2 | 3 | 4 | 5 | 6 | 7 | 8 | 9 | 10 | ID |
| | | | X | Deg-Level ist für diesen Agg-Typ verfügbar | | | | | | | | | | |
| | | | - | Deg-Level ist für diesen Agg-Typ nicht verfügbar | | | | | | | | | | |

FIG 10

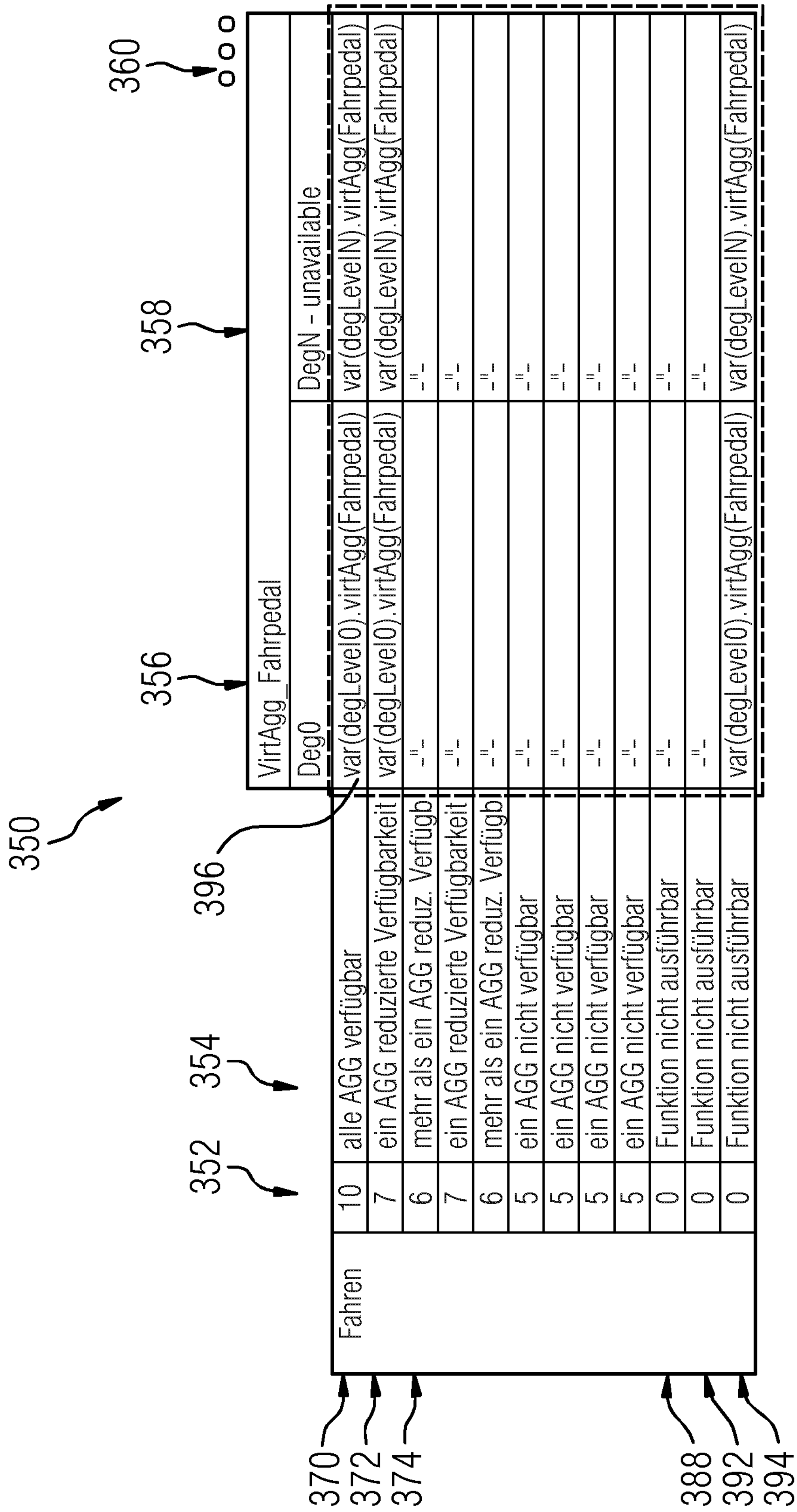
350
352
354
356
358
360
396
370
372
374
388
392
394
VirtAgg_Fahrpedal
Deg0
DegN - unavailable
Fahren
10 alle AGG verfügbar
7 ein AGG reduzierte Verfügbarkeit
6 mehr als ein AGG reduz. Verfügb
7 ein AGG reduzierte Verfügbarkeit
6 mehr als ein AGG reduz. Verfügb
5 ein AGG nicht verfügbar
5 ein AGG nicht verfügbar
5 ein AGG nicht verfügbar
5 ein AGG nicht verfügbar
0 Funktion nicht ausführbar
0 Funktion nicht ausführbar
0 Funktion nicht ausführbar
var(degLevel0).virtAgg(Fahrpedal)
var(degLevelN).virtAgg(Fahrpedal)
-"-

FIG 11

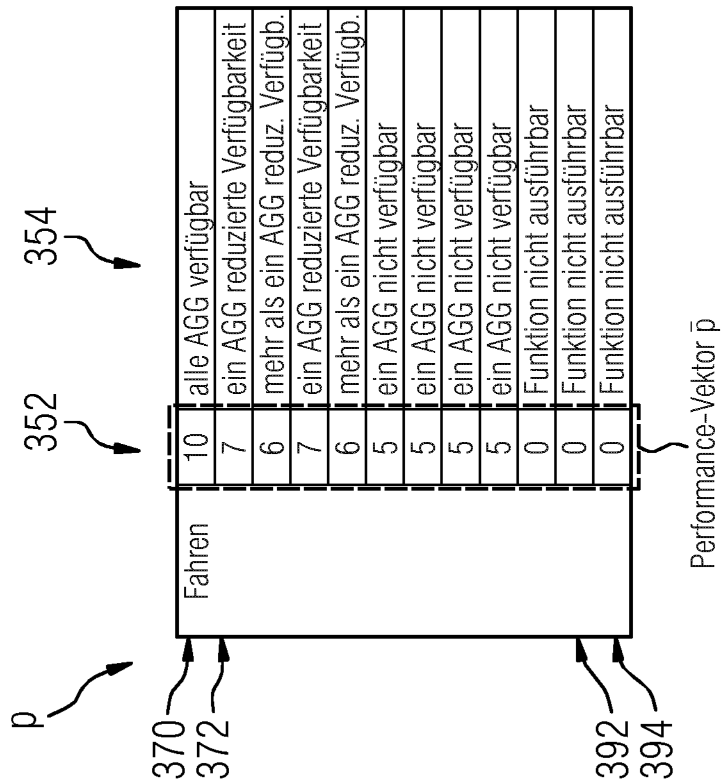
p
370
372
392
394
352
354
Fahren
10
7
6
7
6
5
5
5
5
0
0
0
alle AGG verfügbar
ein AGG reduzierte Verfügbarkeit
mehr als ein AGG reduz. Verfügb.
ein AGG reduzierte Verfügbarkeit
mehr als ein AGG reduz. Verfügb.
ein AGG nicht verfügbar
ein AGG nicht verfügbar
ein AGG nicht verfügbar
ein AGG nicht verfügbar
Funktion nicht ausführbar
Funktion nicht ausführbar
Funktion nicht ausführbar
Performance-Vektor p̄

FIG 12

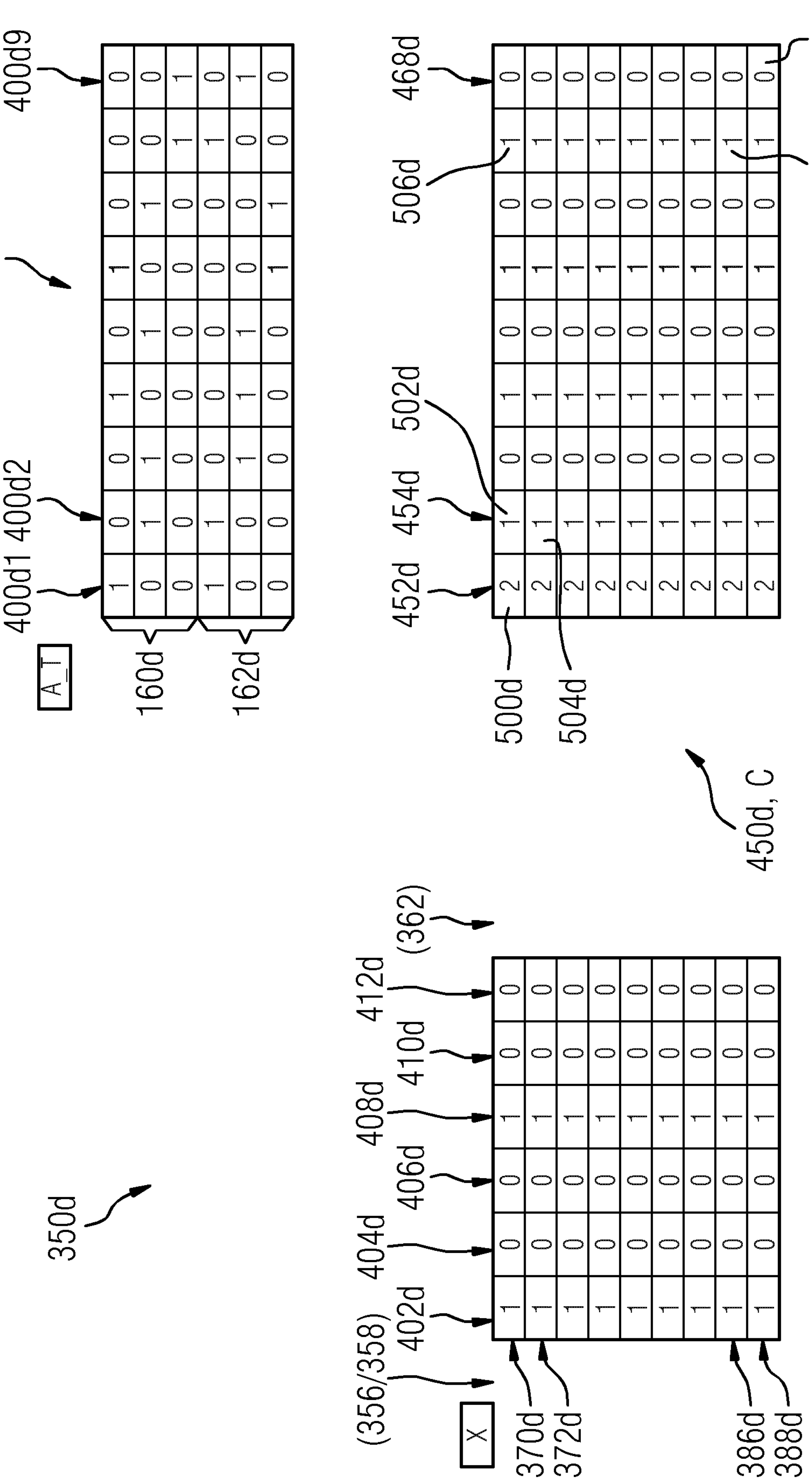
350d
X
(356/358)
402d
404d
406d
408d
410d
412d
(362)
370d
372d
386d
388d
450d, C
A_T
160d
162d
400d1
400d2
400d9
190d
452d
454d
468d
500d
502d
504d
506d
508d
510d

FIG 13

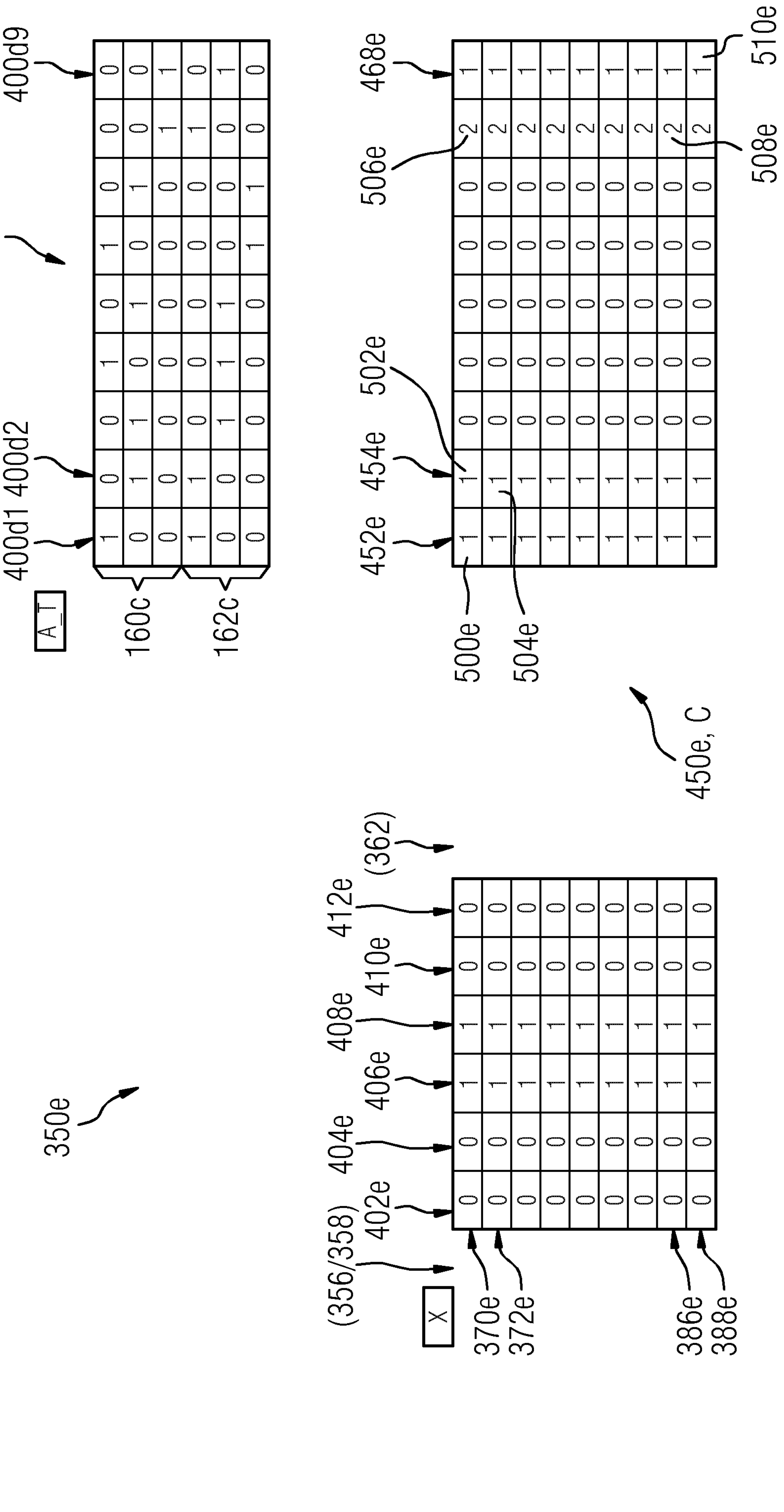
350e
190d
A_T
160c
162c
400d1
400d2
400d9
452e
454e
502e
468e
506e
508e
510e
500e
504e
450e, C
X
(356/358)
402e
404e
406e
408e
410e
412e
(362)
370e
372e
386e
388e

FIG 14

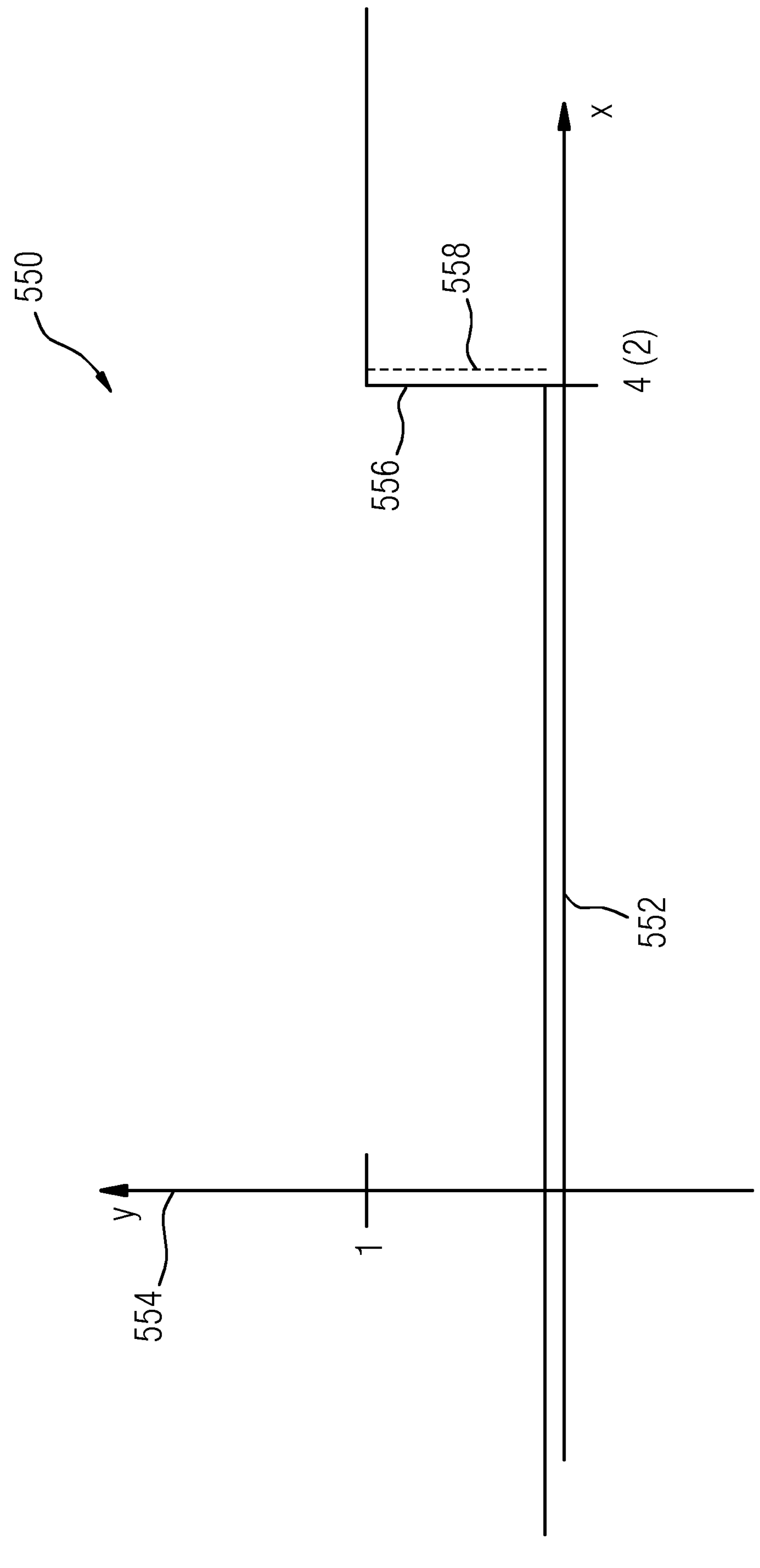

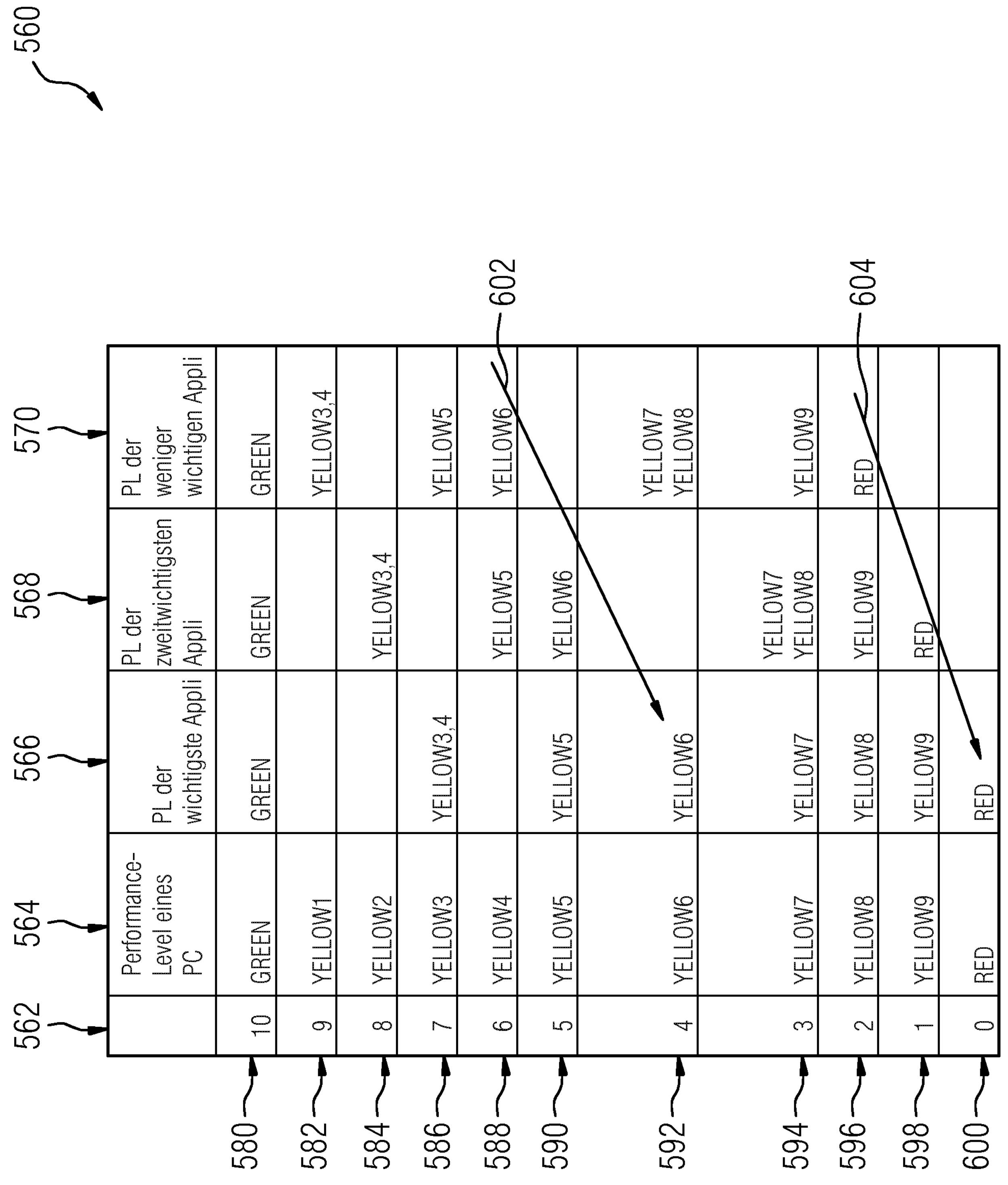
560
562
564
566
568
570
Performance-Level eines PC
PL der wichtigste Appli
PL der zweitwichtigsten Appli
PL der weniger wichtigen Appli
10 GREEN GREEN GREEN GREEN
9 YELLOW1 YELLOW3,4
8 YELLOW2 YELLOW3,4
7 YELLOW3 YELLOW3,4 YELLOW5
6 YELLOW4 YELLOW5 YELLOW6
5 YELLOW5 YELLOW5 YELLOW6
4 YELLOW6 YELLOW6 YELLOW7 YELLOW8
3 YELLOW7 YELLOW7 YELLOW7 YELLOW8 YELLOW9
2 YELLOW8 YELLOW8 YELLOW9 RED
1 YELLOW9 YELLOW9 RED
0 RED RED
580
582
584
586
588
590
592
594
596
598
600
602
604

FIG 15

FIG 16

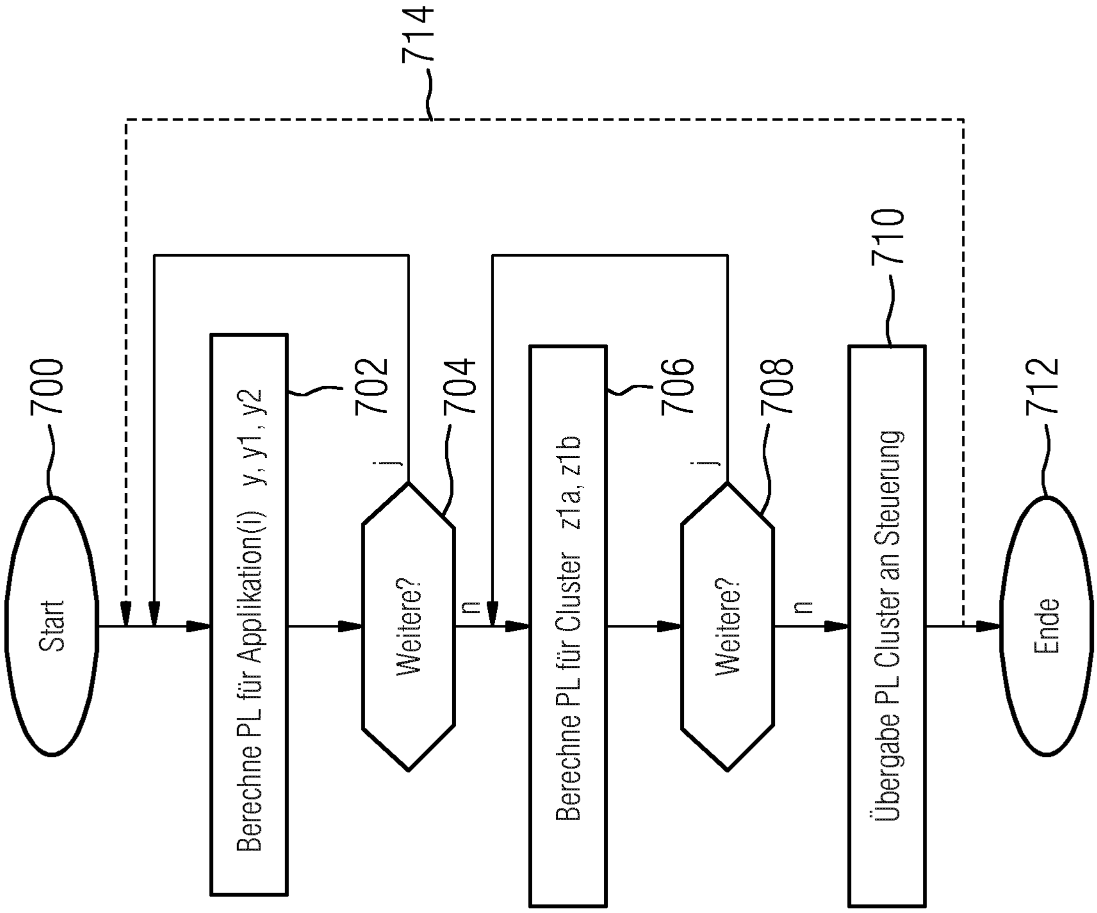

714
700
Start
Berechne PL für Applikation(i) y, y1, y2
702
j
704
Weitere?
n
Berechne PL für Cluster z1a, z1b
706
j
708
Weitere?
n
710
Übergabe PL Cluster an Steuerung
712
Ende

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **REICHEL, R. ; ARMBRUSTER, M.** X-by-Wire Plattform - Konzept und Auslegung. *AT - Automatisierungstechnik,* 02. September 2011, vol. 59 (9), 583-596
- **LI, X.J. ; BIN, G.F. ; DHILLON, B.S.** Model to evaluate the state of mechanical equipment based on health value. *Mechanism and machine theory,* 14. Dezember 2010, vol. 46 (3), 305-311
- **ARMBRUSTER ; LEHMANN ; REICHEL ; ZIMMER ; TJADEN ; OSTERTAG ; WERNER.** X-by-Wire platform design-approach: Functionality, Safety and Design. *In: European Automotive Safety,* 2007
- Eine fahrzeugübergreifende X-by-Wire Plattform zur Ausführung umfassender Fahr- und Assistenzfunktionen. **MICHAEL ARMBRUSTER.** Dissertation. Institut für Luftfahrtsysteme der Universität Stuttgart, 2009